# EUROPEAN PATENT APPLICATION

(11) **EP 2 448 183 A1**
(43) Date of publication of application: **02.05.2012**
(21) Application number: 10791783.3
(22) Date of filing: 20.05.2010
(51) Int. Cl.: H04L 12/46, H04L 12/66

(54) **RELAY DEVICE AND METHOD THEREOF**

(30) Priority: 26.06.2009 JP 2009152696
(71) Applicant: Panasonic Corporation, Kadoma-shi Osaka 571-8501 (JP)
(72) Inventor: UKITA, Yosuke, Osaka 540-6207 (JP); MATSUSHITA, Yosuke, Osaka 540-6207 (JP); HOMMA, Hideki, Osaka 540-6207 (JP)
(74) Representative: Gassner, Wolfgang
(86) International application number: PCT/JP2010/003402
(87) International publication number: WO 2010/150457

(57) **Abstract**

The present invention provides a relay apparatus 130 for, even if an information providing apparatus that distributes a content is changed, assuring a communication quality for the content to be distributed, and preventing a disturbed image from being distributed to a terminal apparatus. If a response packet received from an information providing apparatus having a first domain name indicates a transfer request, the relay apparatus 130 updates a service information table such that a second domain name indicating a second information providing apparatus, included in the response packet, is associated with the first domain name.

## Description

### TECHNICAL FIELD

The present invention relates to a relay apparatus which relays data which is transmitted or received on a communication network, and a method performed by the relay apparatus.

### BACKGROUND ART

In recent years, a communication quality assurance (QoS: Quality of Service) technology has been considered for a technology for assuring a communication quality in real-time communications such as an internet telephone and a VOD (Video on Demand) service. The QoS technology is used in a relay apparatus that relays data in communications on a communication path between a content providing apparatus that provides a content, and a content using apparatus that uses the content. The QoS technology of a relay apparatus used on a wireless LAN (Local Area Network) is standardized for the IEEE (Institute of Electrical and Electronics Engineers) 802.11e, for example. In addition, the HomePlug powerline alliance has put into practical use the QoS technology of a relay apparatus used in PLC (Power Line Communications).

One of conventional relay apparatuses using the QoS technology reserves a bandwidth needed for transmitting a content on a communication path so that a packet will not be discarded or delayed in a real-time communication, thereby assuring a certain level of communication speed (for example, see Patent Document 1). The conventional relay apparatus on a communication path ensures a bandwidth resource for the next relay apparatus in accordance with a bandwidth setting request transmitted by a content using apparatus, and transfers the bandwidth setting request to a content providing apparatus, thereby ensuring a bandwidth resource between the content using apparatus and the content providing apparatus. Thus, a service that should not be delayed or stopped in a communication, such as a real-time distribution of a sound or a movie, or a television telephone, can be transmitted in priority to other services.

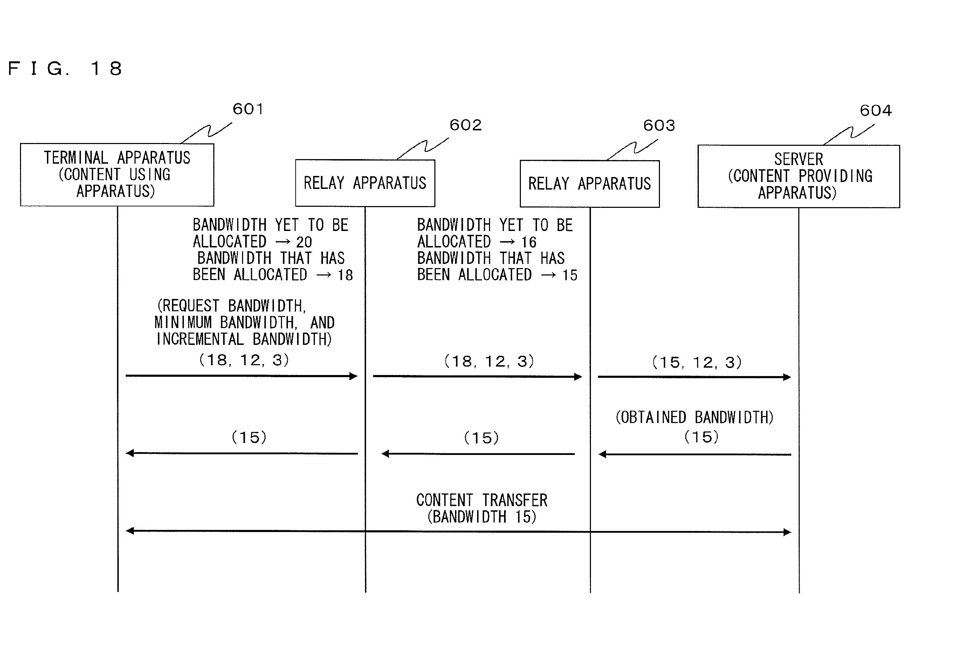

FIG 18 is a view for explaining a conventional bandwidth setting method used in Patent Document 1. As shown in FIG. 18, content using apparatus (hereinafter, referred to as a terminal apparatus) 601 that uses a content, and a content providing apparatus (hereinafter, referred to as a server) 604 that provides the content are connected via a relay apparatus 602 and a relay apparatus 603. The following description of operation assumes, as an example, the case where the terminal apparatus 601 has made a request for a bandwidth setting such that a request bandwidth originally requested is 18 Mbps, a minimum bandwidth is 12 Mbps, and an incremental bandwidth is 3 Mbps. In FIG. 18, values in parentheses above an arrow of each of flows indicate values (a request bandwidth, a minimum bandwidth, and an incremental bandwidth) of bandwidth setting information in a bandwidth setting request. The units of the bandwidths, which are Mbps, are not shown.

First, the terminal apparatus 601 transmits the bandwidth setting request toward the server 604. The relay apparatus 602 receives and analyzes the bandwidth setting request transmitted by the terminal apparatus 601, temporarily ensures a bandwidth of 18 Mbps which is indicated by the request bandwidth, and outputs the bandwidth setting request toward the server 604. Next, the relay apparatus 603 receives and analyzes the bandwidth setting request. Then, the case where the relay apparatus 603 attempts to temporarily ensure a bandwidth of 18 Mbps which is indicated by the request bandwidth but a bandwidth that can be allocated is only 16 Mbps, is assumed. In this case, the relay apparatus 603 attempts to temporarily ensure a bandwidth of 15 (= 18-3) Mbps which is a value obtained by subtracting the value indicated by the incremental bandwidth from the value indicated by the request bandwidth. Here, since the relay apparatus 603 has succeeded at temporarily ensuring the bandwidth, the relay apparatus 603 rewrites the value indicated by the request bandwidth into 15 Mbps, and outputs the bandwidth setting request toward the server 604.

Next, the server 604 creates a bandwidth setting response including, as an acquired bandwidth, the value indicated by the request bandwidth included in the bandwidth setting request, and transmits the bandwidth setting response toward the terminal apparatus 601. Next, since the value indicated by the acquired bandwidth in the bandwidth setting response is the same as the bandwidth temporarily ensured by the relay apparatus 603, the relay apparatus 603 ensures the same bandwidth as the temporarily ensured bandwidth, and outputs the bandwidth setting response toward the terminal apparatus 601. Next, since the value indicated by the acquired bandwidth in the bandwidth setting response is different from the bandwidth temporarily ensured by the relay apparatus 602, the relay apparatus 602 ensures a bandwidth of 15 Mbps which is a value obtained by subtracting 3 (= 18 - 15) which is a difference between the temporarily ensured bandwidth and the acquired bandwidth, and outputs the bandwidth setting response toward the terminal apparatus 601.

When the terminal apparatus 601 has received the bandwidth setting response, the terminal apparatus 601 recognizes a success of the bandwidth setting at 15 Mbps, and outputs a content transmission request to the server 604 at a bandwidth of 15 Mbps. The server 604 changes a transmission rate of the content to the value indicated by the request bandwidth, and transmits the content to the terminal apparatus 601 at the changed rate.

Thus, the above conventional bandwidth setting method needs to set various parameters for the relay apparatuses 602 and 603 to reserve bandwidths. Here, the parameters are, for example, information about a transmission source IP address of the server 604 which is used for determining whether or not a packet is a target of quality assurance, a destination IP address of the terminal apparatus 601, a bandwidth needed for transmitting a content. When the terminal apparatus 601 requests the relay apparatuses 602 and 603 for a reservation of a bandwidth, the terminal apparatus 601 needs to directly transmit a control packet of a bandwidth setting request including the parameters to the relay apparatuses 602 and 603, or to transmit the control packet via other servers to the relay apparatuses 602 and 603. By receiving the control packet, the relay apparatuses 602 and 603 can grasp identification information about a content packet, and a bandwidth needed for transmitting the content packet, and set the bandwidth.

### CITATION LIST

### PATENT LITERATURE

[PLTI] Japanese Laid-Open Patent Publication No. H10-145424

### SUMMARY OF THE INVENTION

### PROBLEMS TO BE SOLVED BY THE INVENTION

However, in the conventional bandwidth setting method, the terminal apparatus 601 needs to have a function of generating a control packet, the server 604 needs to have a function of returning the control packet transmitted by the terminal apparatus 601, to the terminal apparatus 601, and the relay apparatuses 602 and 603 need to have functions of dealing with a the control packet to set various parameters for reserving a bandwidth. That is, there is a restriction in use that all of the server 604, the terminal apparatus 601, and the relay apparatuses 602 and 603 on a communication path need to have functions that relates to QoS processing. Therefore, if there is at least one apparatus that does not have the function that relates to QoS processing on the communication path, a quality assurance for transmission of a content cannot be performed. This can give a significant constraint to a network at home, in which various apparatuses such as a new product, an old product, and products of different manufacturers are expected to coexist.

Therefore, the present invention has been made in view of the above problems, and an object of the present invention is to provide a relay apparatus for, even on a network including an apparatus that does not have a function that relates to QoS processing, assuring a communication quality for a distribution of a content, and preventing a disturbed image from being distributed to a terminal apparatus, and to provide a method performed by the relay apparatus.

### SOLUTION TO THE PROBLEMS

In order to solve the above problems, the present invention has the following aspects. A first aspect of the present invention is a relay apparatus which connects a first network and a second network in a mutual manner and relays a packet which is transmitted or received, the relay apparatus comprising: a first communication section for communicating, via the first network, with a terminal apparatus that transmits an acquisition request for a content to a first information providing apparatus having a first domain name; a second communication section for communicating, via the second network, with the first information providing apparatus; a storage section for storing, as a service information table, the first domain name and a parameter that relates to transmission of the content, such that the first domain name and the parameter correspond to each other; and a control section for, when the second communication section has received a response packet transmitted from the first information providing apparatus to the terminal apparatus as a response to the acquisition request for the content transmitted from the terminal apparatus to the first information providing apparatus, determining whether or not the response packet indicates a transfer request, and if the control section has determined that the response packet indicates the transfer request, storing, in the service information table, a second domain name, included in the response packet, that indicates a second information providing apparatus, such that the second domain name is associated with the first domain name.

Preferably, the control section includes: a response packet detection section for detecting a response packet in which an IP address of the first information providing apparatus is written as a transmission source, from response packets received by the second communication section, and for outputting the response packet that has been detected, to a transfer request analysis section; the transfer request analysis section for analyzing the response packet that has been detected by the response packet detection section, and for determining whether or not the response packet indicates a transfer request; and a domain information updating section, if the transfer request analysis section has determined that the response packet indicates a transfer request, stores, in the service information table, the second domain name, included in the response packet, that indicates the second information providing apparatus, such that the second domain name is associated with the first domain name.

The transfer request analysis section analyzes an HTTP (HyperText Transfer Protocol) message of the response packet, and if the response packet indicates HTTP redirection, determines that the response packet indicates a transfer request.

In addition, the relay apparatus may further comprise a second control section for determining whether or not QoS processing is needed. In this case, the second communication section communicates, via the second network, with a DNS (Domain Name System) server. The second control section includes: a DNS detection section for detecting a DNS response packet that is a response to a DNS request packet transmitted from the terminal apparatus to the DNS server; a DNS analysis section for extracts a predetermined domain name and an IP address corresponding to the predetermined domain name, from the DNS response packet detected by the DNS detection section; and a QoS necessity determination section for determining whether or not the predetermined domain name extracted by the DNS analysis section is registered in the service information table, and if the QoS necessity determination section has determined that the predetermined domain name extracted by the DNS analysis section is registered in the service information table, determines that QoS processing is needed for the predetermined domain name.

If the QoS necessity determination section has determined that the predetermined domain name extracted by the DNS analysis section is registered in the service information table, the QoS necessity determination section outputs the IP address extracted by the DNS analysis section to the response packet detection section.

Preferably, the first communication section further includes a QoS processing section for, if the QoS necessity determination section has determined that the predetermined domain name included in the DNS response packet coincides with the first domain name, referring to the service information table, and setting the parameter, which relates to QoS processing, corresponding to the first domain name, for a relay packet that relays the content transmitted from the first information providing apparatus to the terminal apparatus.

In addition, the first communication section may further include a QoS processing section for, if the QoS necessity determination section has determined that the predetermined domain name included in the DNS response packet coincides with the second domain name, referring to the service information table, and setting the parameter, which relates to QoS processing, corresponding to the first domain name with which the second domain name is associated, for a relay packet that relays the content transmitted from the second information providing apparatus to the terminal apparatus.

In addition, the storage section may further store a QoS management table for storing a parameter that relates to QoS processing. In this case, the QoS necessity determination section, if the QoS necessity determination section has determined that the predetermined domain name included in the DNS response packet is registered in the service information table, obtains a parameter corresponding to the predetermined domain name from the service information table. The second control section further includes a QoS registering section for storing, in the QoS management table, the parameter obtained by the QoS necessity determination section. The first communication section further includes a QoS processing section for referring to the QoS management table, and setting, for a relay packet that relays the content transmitted from an information providing apparatus corresponding to the predetermined domain name to the terminal apparatus, the parameter, which relates to QoS processing, corresponding to the relay packet. In addition, the transfer request is HTTP redirection.

A second aspect of the present invention is a relay apparatus which connects a first network and a second network in a mutual manner and relays a packet which is transmitted or received, the relay apparatus comprising: a first communication section for communicating, via the first network, with a terminal apparatus that requests a first information providing apparatus having a first domain name to transmit a content; a second communication section for communicating, via the second network, with a DNS server; a storage section for storing, as a service information table, the first domain name and a parameter that relates to transmission of the content, such that the first domain name and the parameter correspond to each other; and a control section for, when the second communication section has received a DNS response packet that is a response to a DNS request packet transmitted from the terminal apparatus to the DNS server and requesting the DNS server for an IP address corresponding to a predetermined domain name, and that includes the predetermined domain name and a second domain name indicating an alias name of the predetermined domain name, determining whether or not the predetermined domain name included in the DNS response packet coincides with the first domain name, and if the control section has determined that the predetermined domain name included in the DNS response packet coincides with the first domain name, storing, in the service information table, the second domain name included in the DNS response packet, such that the second domain name is associated with the first domain name.

In addition, a resource record type of the DNS response packet including the second domain name indicating the alias name of the predetermined domain name is a CNAME (Canonical NAME for an alias).

### ADVANTAGEOUS EFFECTS OF THE INVENTION

As described above, in the present invention, even if an information providing apparatus that is supposed to be connected is changed to an information providing apparatus having a different domain name, the relay apparatus analyzes a transfer request (HTTP redirection) transmitted to a terminal apparatus by an information providing apparatus, detects a change of the domain name of the information providing apparatus, and updates the service information table 312 including the domain name and the service parameters corresponding to the domain name. Thus, the relay apparatus can assure a communication quality by identifying a content distributed by the information providing apparatus having a different domain name, and performing QoS processing. As a result, the user can view and listen to a content with a high quality, in which interruption or disturbance of video does not occur.

In addition, the relay apparatus designates the IP address, included in the DNS response packet, of an information providing apparatus that transmits a content that is a QoS target, and analyzes the payload section of an HTTP packet having the designated IP address of the information providing apparatus. The relay apparatus does not analyze an HTTP packet transmitted from a server other than the information providing apparatus having the designated IP address. Thus, the relay apparatus does not need to perform processing of analyzing the payload (message) sections of all HTTP packets, thereby suppressing increase in a load on the CPU, and avoiding decrease in a communication throughput.

In addition, in the present invention, even if a DNS response packet includes not an IP address of an information providing apparatus but an alias domain name as a CNAME, the relay apparatus analyzes the DNS response packet which is transmitted to a terminal apparatus by a DNS server, detects an alias domain name of the information providing apparatus as a CNAME, and updates the service information table including the domain name and the service parameters corresponding to the domain name. Thus, the relay apparatus can assure a communication quality by identifying a content distributed by the information providing apparatus having an alias domain name, and performing QoS processing. As a result, the user can view and listen to a video content with a high quality, in which interruption or disturbance of video does not occur.

### BRIEF DESCRIPTION OF THE DRAWINGS

[FIG. 1] FIG. 1 is a diagram showing an example of a network configuration in a first embodiment of the present invention.
[FIG. 2] FIG. 2 is a function block diagram showing an example of a configuration of each of relay apparatuses 130 according to the first embodiment of the present invention.
[FIG. 3] FIG. 3 is a diagram showing an example of a memory configuration of a service information table 312 according to the first embodiment of the present invention.
[FIG. 4] FIG. 4 is a diagram showing another example of the memory configuration of the service information table 312 according to the first embodiment of the present invention.
[FIG. 5] FIG. 5 is a diagram showing an example of a memory configuration of a QoS management table 315 according to the first embodiment of the present invention.
[FIG. 6] FIG. 6 is a diagram for explaining a packet configuration of a DNS packet used in the first embodiment of the present invention.
[FIG. 7] FIG. 7 is a diagram showing a packet configuration of an HTTP packet used in the first embodiment of the present invention.
[FIG. 8] FIG. 8 is a sequence diagram indicating operations of apparatuses in the network according to the first embodiment of the present invention.
[FIG. 9] FIG. 9 is a sequence diagram indicating operations of the apparatuses in the network according to the first embodiment of the present invention.
[FIG. 10] FIG. 10 is a flowchart showing, in detail, operation of a relay apparatus 130c according to the first embodiment of the present invention.
[FIG. 11] FIG. 11 is a function block diagram showing an example of a configuration of each of relay apparatuses 130 according to a second embodiment of the present invention.
[FIG. 12] FIG. 12 is a diagram showing an example of a memory configuration of a service information table 404 according to the second embodiment of the present invention.
[FIG. 13] FIG. 13 is a diagram for explaining a packet configuration of a DNS packet used in the second embodiment of the present invention.
[FIG. 14] FIG. 14 is a sequence diagram indicating operations of apparatuses in a network according to the second embodiment of the present invention.
[FIG. 15] FIG. 15 is a flowchart showing, in detail, operation of a relay apparatus 130c according to the second embodiment of the present invention.
[FIG. 16A] FIG. 16A is a function block diagram showing an example of a configuration of each of relay apparatuses 130 according to a third embodiment of the present invention.
[FIG. 16B] FIG. 16B is a function block diagram showing an example of a configuration of each of the relay apparatuses 130 according to the third embodiment of the present invention.
[FIG. 17] FIG. 17 is a diagram for explaining priority control processing performed by a QoS processing section 304 used in each embodiment of the present invention.
[FIG. 18] FIG. 18 is a diagram for explaining a conventional bandwidth setting method.

### BEST MODE FOR CARRYING OUT THE INVENTION

Hereinafter, relay apparatuses according to embodiments of the present invention and methods performed by the relay apparatuses will be described with reference to the drawings. Although the relay apparatuses according to the embodiments of the present invention, and the methods performed by the relay apparatuses can be applied to many different types of networks, a specific example in which the present invention is applied to a power line communication (hereinafter, referred to as "PLC") network will be described below. However, all or part of the disclosures below can also be applied to other types of networks such as a wireless network.

### (First embodiment)

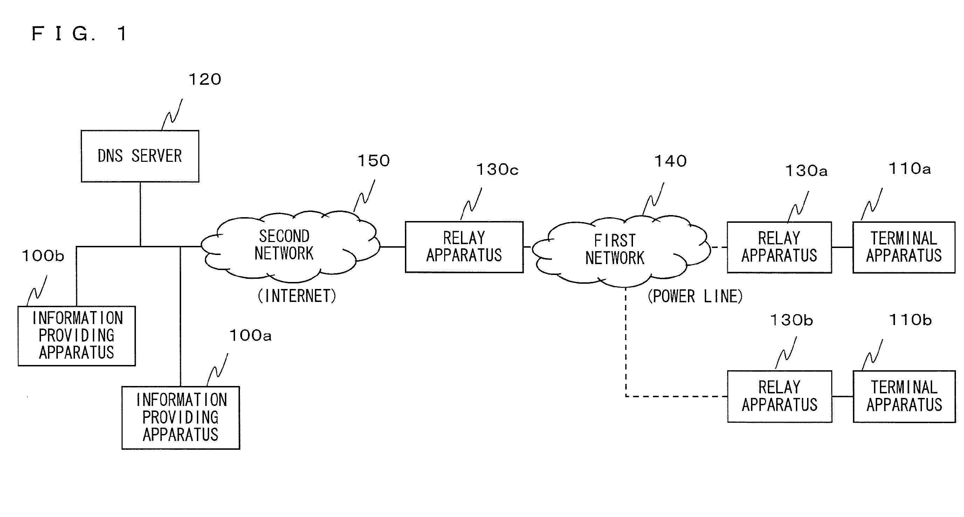

FIG. 1 is a diagram showing an example of a network configuration in a first embodiment of the present invention. As shown in FIG. 1, the network according to the present embodiment includes various information providing apparatuses (content servers) 100a to 100b, various terminal apparatuses 110a to 110b, and a DNS server 120. The information providing apparatuses 100a to 100b are connected to the terminal apparatuses 110a to 110b via relay apparatuses 130a to 130c. Specifically, the terminal apparatuses 110a to 110b are respectively connected to the relay apparatuses 130a to 130b via Ethernet (registered trademark) cables. The relay apparatuses 130a to 130c are connected to each other via a first network (for example, power line network) 140. In addition, the information providing apparatuses 100a to 100b, and the DNS server 120 are connected to the relay apparatus 130c via a second network (for example, the Internet) 150.

It is noted that in the description below, the relay apparatuses 130a to 130c are simply denoted by the relay apparatuses 130 when they are collectively referred to, the terminal apparatuses 110a and 110b are simply denoted by the terminal apparatuses 110 when they are collectively referred to, and the information providing apparatuses 100a and 100b are simply denoted by the information providing apparatuses 100 when they are collectively referred to. In an example shown in FIG. 1, there are three relay apparatuses 130a to 130c, two terminal apparatuses 110a and 110b, and two information providing apparatuses 100a and 100b. However, the numbers of them are merely an example. Any numbers of the above apparatuses may be provided.

The information providing apparatuses 100 have various contents, and transmit the contents to the terminal apparatuses 110. The information providing apparatuses 100 may be, for example, AV servers providing AV contents to the terminal apparatuses 110, or music servers providing music contents. In the present embodiment, the information providing apparatus 100a and the information providing apparatus 100b have different domain names and different IP addresses.

The terminal apparatuses 110 have functions of receiving contents from the information providing apparatuses 100, and reproducing video or audio. The terminal apparatuses 110 may be, for example, apparatuses such as a television or a personal computer. In FIG. 1, the terminal apparatuses 110 are distinguished as the terminal apparatus 110a and the terminal apparatus 110b.

The DNS server 120 has a function of matching a domain name indicating a host name of the information providing apparatus 100a to an IP address of of the information providing apparatus 100a corresponding to the domain name; and of matching a domain name indicating a host name of the information providing apparatus 100b to an IP address of the information providing apparatus 100b corresponding to the domain name. When the DNS server 120 has received DNS request packets including domain names of the information providing apparatuses 100 from the terminal apparatuses 110, the DNS server 120 refers to the domain names included in the DNS request packets. Then, the DNS server 120 transmits DNS response packets to return IP addresses of the information providing apparatuses 100 corresponding to the domain names, to the terminal apparatuses 110.

It is noted that the number of the information providing apparatuses 100 corresponding to one domain name is not always one. In some cases, a plurality of the information providing apparatuses 100 correspond to one domain name. In this case, different IP addresses are respectively assigned to the plurality of information providing apparatuses 100. That is, the DNS server 120 may sometimes add a plurality of IP addresses corresponding one domain name to a DNS response packet, and transmit the DNS response packet to the corresponding terminal apparatus 110.

The relay apparatuses 130a to 130c are PLC bridges for relaying data that is transmitted and received via different types of networks. In FIG. 1, the relay apparatuses 130a to 130c relay contents transmitted from the information providing apparatuses 100, DNS packets transmitted and received between the terminal apparatuses 110 and the DNS server 120, and the like. In addition, each of the relay apparatuses 130a to 130c has a QoS processing function. For example, each of the relay apparatuses 130a to 130c has a function of reserving a bandwidth (hereinafter, referred to as a "request bandwidth") required for transmitting a content through each path among the relay apparatuses 130a to 130c, or has a function of setting priorities for respective contents and transmitting the contents, based on the priorities. The present embodiment will be described under the assumption that each of the relay apparatuses 130 has a function of setting priorities for respective contents that are QoS targets, and transmitting the contents, based on the priorities. In addition, in the present embodiment, only QoS processing performed on each path among the relay apparatuses 130a to 130c will be described. Therefore, QoS processing performed on, for example, a path between the relay apparatus 130a and the terminal apparatus 110a will not be described.

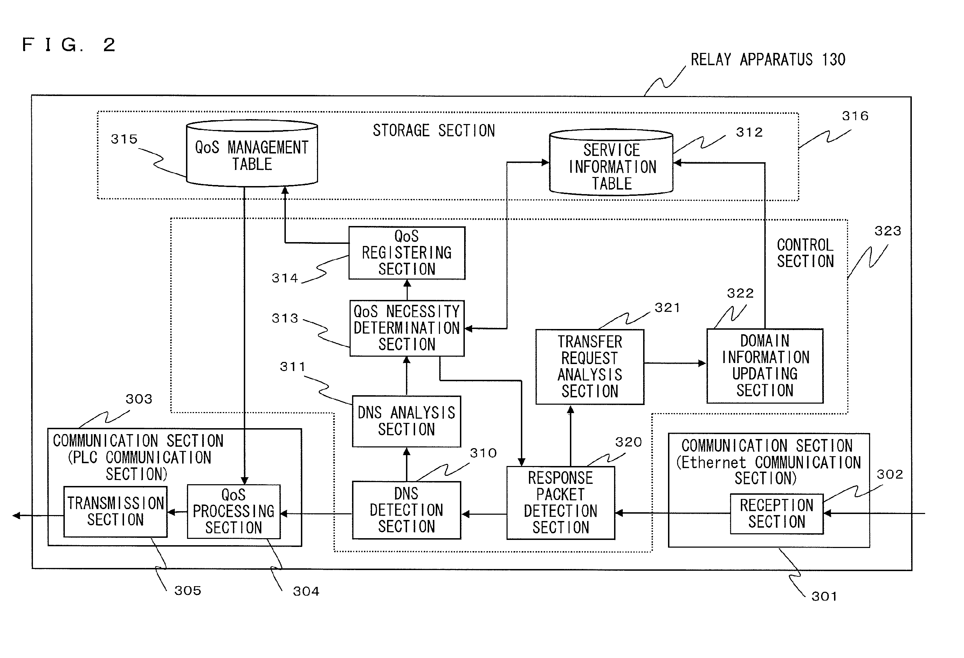

FIG. 2 is a function block diagram showing an example of a configuration of each of the relay apparatuses 130 according to the present embodiment. As shown in FIG. 2, the relay apparatus 130 includes a communication section (communication device) 301, a communication section (communication device) 303, a storage section 316, and a control section 323. It is noted that in the example in FIG. 2, a configuration, of the relay apparatus 130, that is needed for relaying data from the second network 150 to the first network 140 is shown, and a configuration that is needed for relaying data from the first network 140 to the second network 150 is not shown.

The communication section 301 transmits data to and receives data from the information providing apparatus 100 and the DNS server 120 via the second network 150. In the case where the second network 150 is the Internet, the communication section 301 is an Ethernet (registered trademark) communication section. The communication section 301 includes a transmission section (not shown) and a reception section 302. The transmission section has a function of transmitting data to the information providing apparatus 100 and the DNS server 120. The reception section 302 has a function of demodulating data received by the communication section 301.

The communication section 303 transmits data to and receives data from the relay apparatuses 130a and 130b via a power line network. In the example in FIG. 2, the communication section 303 is a PLC communication section. The communication section 303 includes a QoS processing section 304, a transmission section 305, and a reception section (not shown). The transmission section 305 has a function of media access control (MAC) for the transmission communication section 303, and a function of modulating data to be transmitted. The reception section has a function of demodulating data received by the communication section 303. The detail of the QoS processing section 304 will be described later.

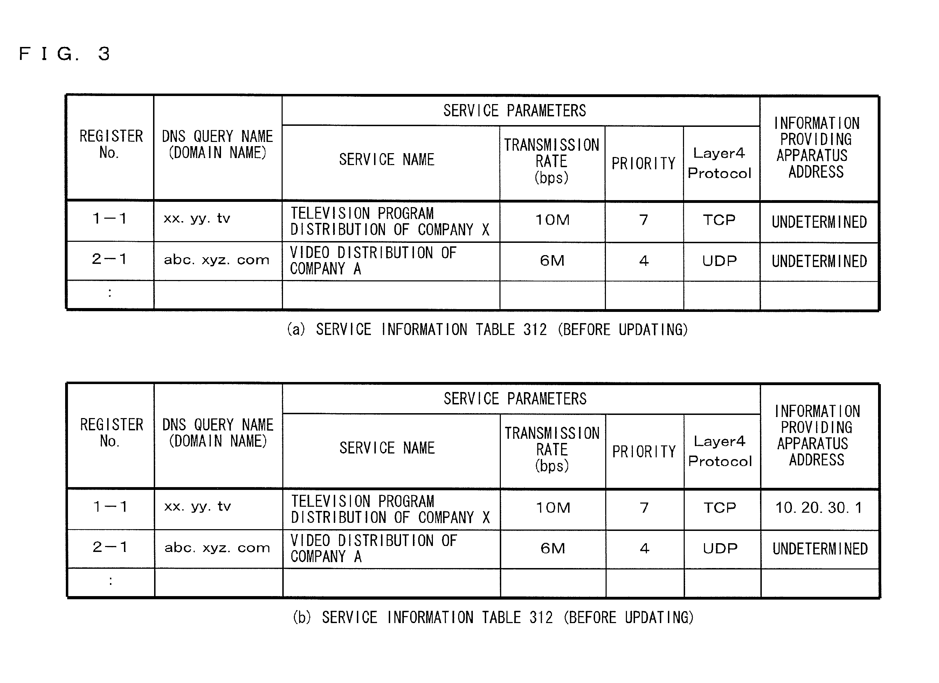

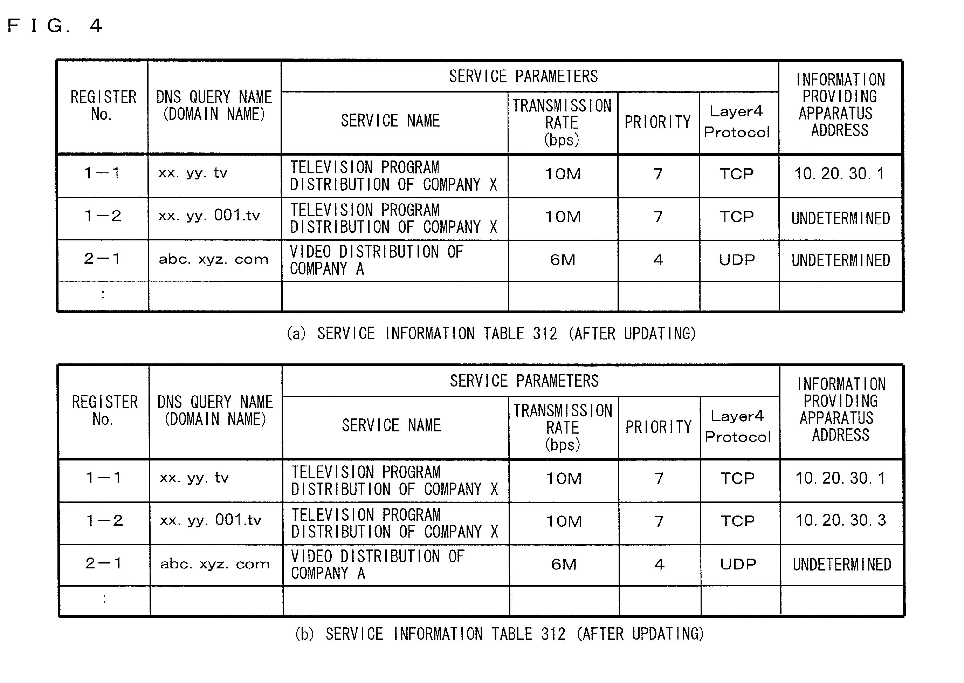

The storage section 316 stores a service information table 312 and a QoS management table 315. The service information table 312 stores a domain name indicating the type of content, various parameters (hereinafter, referred to as service parameters) associated with the domain name, and the address of each of the information providing apparatuses 100 such that they correspond to each other. The service parameters include parameters that relate to transmission of contents such as the names of services provided by the information providing apparatuses 100, and request bandwidths and priorities for contents corresponding to the domain names. It is noted that the details of the service information table 312 will be described with reference to FIG. 3 and FIG. 4.

Here, the domain names will be described. The domain names indicate the host names of the information providing apparatuses 100. In addition, the types of the information providing apparatuses 100 can sometimes be identified by the domain names. For example, if a domain name includes a string of characters such as "stream", "video", "movie", or "music", it is possible to identify a server of this domain name as an information providing apparatus that distributes a content of music or video. In addition, if a domain name includes a string of characters of "game", it is possible to identify a server of this domain name as a game server.

The types of contents transmitted by the information providing apparatuses 100 can sometimes be identified by level domains such as top level domains, second level domains, or third level domains in domain names. Therefore, for example, whether a content distributed by each of the information providing apparatuses 100 is music or video can be identified by the level domain. A domain name is includes in a DNS packet transmitted and received between the terminal apparatuses 110 and the DNS server 120. Therefore, the relay apparatuses 130 can obtain domain names by relaying DNS packets transmitted by the DNS server 120.

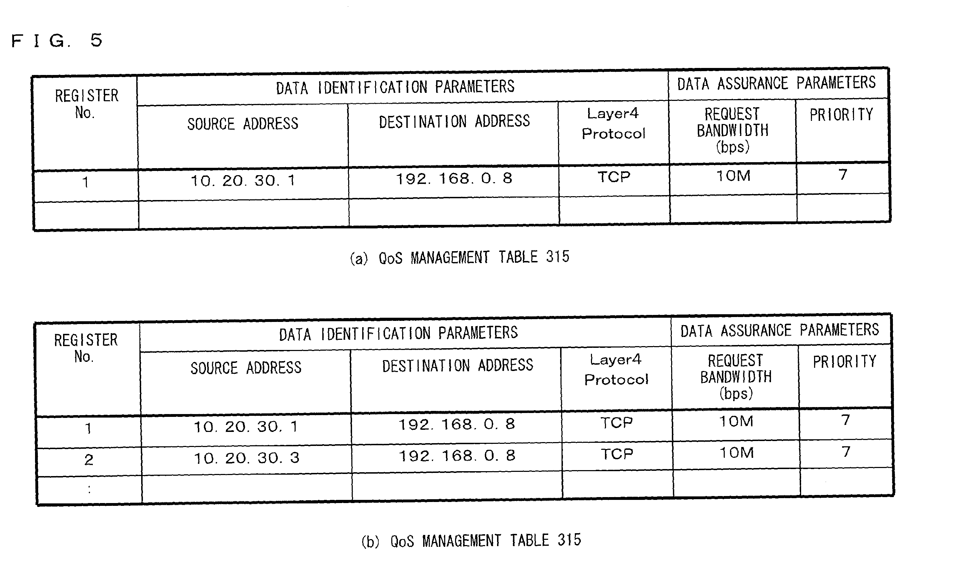

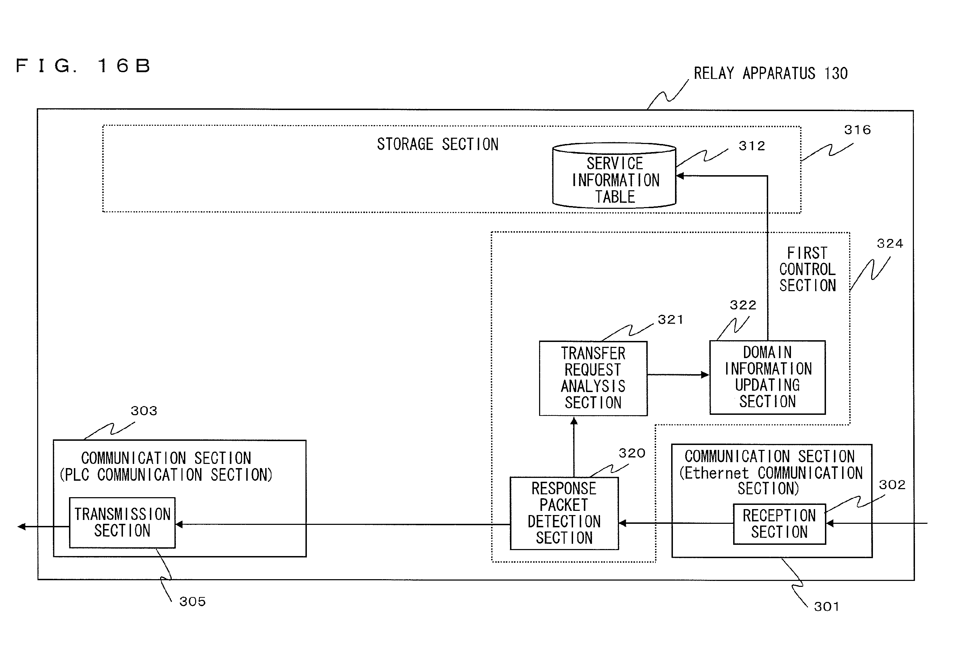

The QoS management table 315 stores various parameters that relate to QoS processing. The details of the QoS management table 315 will be described later with reference to FIG. 5. It is noted that in the case where the relay apparatuses 130 do not perform QoS processing (that is, the communication section 303 does not include the QoS processing section 304), the storage section 316 does not necessarily need to store the QoS management table 315 (for example, see FIG. 16B).

Next, the control section 323 will be described. Here, it is assumed that the terminal apparatus 110a transmits a content acquisition request to the information providing apparatus 100a, and that the relay apparatus 130 receives, form the information providing apparatus 100a, a response packet indicating that the acquisition destination of the content has been changed to the information providing apparatus 100b. In the relay apparatus 130, the control section 323 determines whether or not the reception section 302 has received the response packet transmitted from the information providing apparatus 100a to the terminal apparatus 110a, which response packet is a response to the content acquisition request transmitted from the terminal apparatus 110a to the information providing apparatus 100a. Then, the control section 323 determines whether or not the response packet received by the reception section 302 indicates a transfer request. If the response packet indicates a transfer request, the control section 323 stores, in the service information table 312, a domain name included in the response packet that indicates the information providing apparatus 100b which is the changed acquisition destination, such that the domain name is associated with a domain name of the information providing apparatus 100a which is the acquisition destination that is yet to be changed.

A specific configuration example of the control section 323 will be described. With reference to FIG. 2, the control section 323 includes a DNS detection section 310, a DNS analysis section 311, a QoS necessity determination section 313, a QoS registering section 314, a response packet detection section 320, a transfer request analysis section 321, and a domain information updating section 322. It is noted that the configuration of the control section 323 is merely an example, and a configuration other than the above may be adopted.

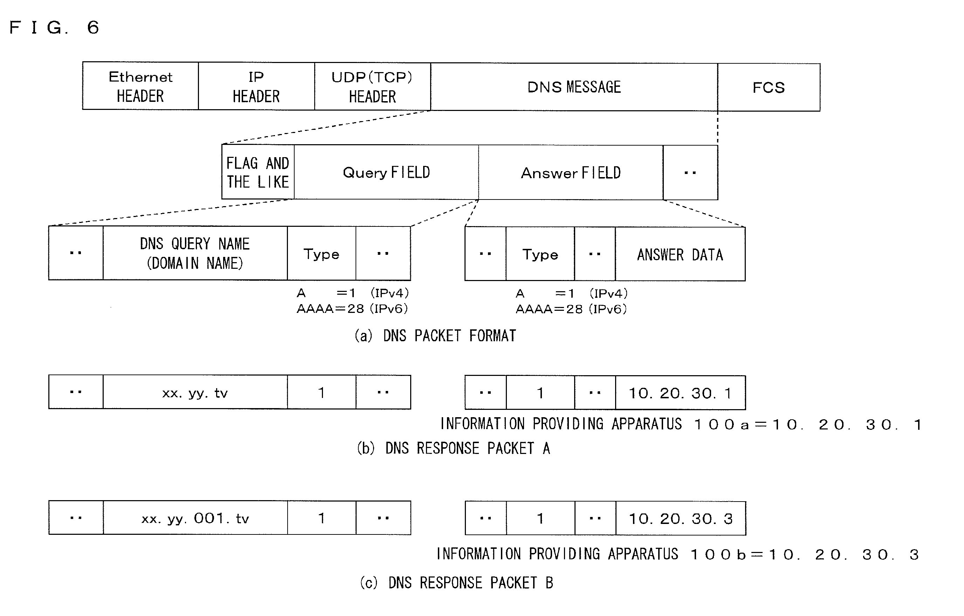

The DNS detection section 310 determines the type of data received by the reception section 302. If the data is a DNS response packet, the DNS detection section 310 transfers the data to the DNS analysis section 311. Specifically, the DNS detection section 310 checks the port number of the UDP (User Datagram Protocol) header or the port number of the TCP (Transmission Control Protocol) header of the received data. If the port number is 53, the DNS detection section 310 can determine the received data to be a DNS packet. In addition, since an identifier indicating a DNS request or a DNS response is included in a flag area of a DNS packet, the DNS detection section 310 can determine whether a DNS packet is a DNS request packet or a DNS response packet. It is noted that a configuration of the DNS packet will be described later with reference to FIG. 6.

The DNS analysis section 311 extracts a DNS query name (domain name) included in a received DNS response packet, and an answer IP address corresponding to the DNS query name. The DNS analysis section 311 transfers the extracted domain name and answer IP address to the QoS necessity determination section 313. It is noted that in the case where the control section 323 does not have the QoS necessity determination section 313, the DNS analysis section 311, instead of the QoS necessity determination section 313, may register the answer IP address in "information providing apparatus address" of the service information table 312, and transfer the answer IP address to the response packet detection section 320.

The QoS necessity determination section 313 confirms whether or not the domain name transferred from the DNS analysis section 311 is registered in the service information table 312. If the domain name is not registered, the QoS necessity determination section 313 determines that QoS processing is not needed for a service corresponding to the domain name, and does not perform QoS processing. On the other hand, if the domain name is registered, the QoS necessity determination section 313 determines that QoS processing is needed for a service corresponding to the domain name, and obtains service parameters corresponding to the domain name from the service information table 312. In addition, the QoS necessity determination section 313 registers the answer IP address transferred from the DNS analysis section 311 in the "information providing apparatus address" of the service information table 312. Next, the QoS necessity determination section 313 transfers, to the QoS registering section 314, the service parameters such as a transmission rate and a priority, and the answer IP address transferred from the DNS analysis section 311. In addition, at the same time, the QoS necessity determination section 313 transfers the answer IP address also to the response packet detection section 320.

The QoS registering section 314 registers, in the QoS management table 315, the transmission rate (request bandwidth), the priority, and the answer IP address transferred from the QoS necessity determination section 313.

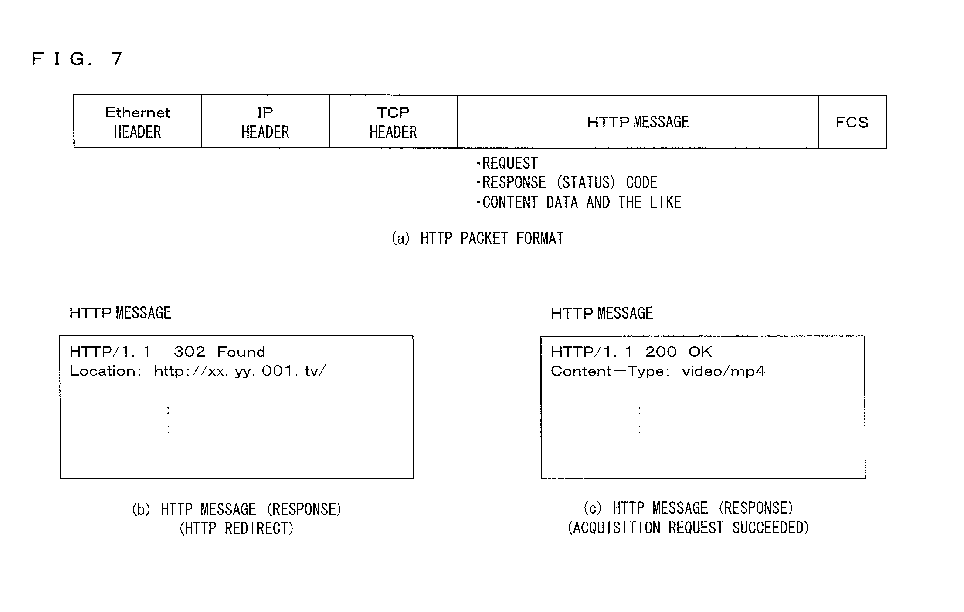

The response packet detection section 320 determines whether or not the reception section 302 has received the response packet transmitted from the information providing apparatus 100a to the terminal apparatus 110a, which response packet is a response to the content acquisition request transmitted from the terminal apparatus 110a to the information providing apparatus 100a. Specifically, the response packet detection section 320 determines the type of data received by the reception section 302. Only if the received data is an HTTP packet transmitted by the information providing apparatus 100 for which QoS processing is to be performed, the response packet detection section 320 transfers the received data as the response packet, to the transfer request analysis section 321. For example, if the port number in the TCP header of the received data is 80, and the answer IP address transferred from the QoS necessity determination section 313 coincides with the transmission source IP address in the IP header of the received data, the response packet detection section 320 transfers the received data as the response packet, to the transfer request analysis section 321. That is, an HTTP packet transmitted from an information providing apparatus other than the one corresponding to the answer IP address is not transferred to the transfer request analysis section 321. A configuration of an HTTP packet will be described later with reference to FIG 7.

The transfer request analysis section 321 determines whether or not the response packet received by the reception section 302 is a transfer request from the information providing apparatus 100. As a specific example, the transfer request analysis section 321 analyzes an HTTP message of the response packet. Then, if the response (status) code indicates HTTP redirection, the transfer request analysis section 321 determines that the response packet is a transfer request from the information providing apparatus 100. If the response code indicates HTTP redirection, the transfer request analysis section 321 transfers, to the domain information updating section 322, a transfer destination URL (Uniform Resource Locator) in the Location header, and a source address in the IP header which are written in the HTTP message. Examples of response codes indicating HTTP redirection are "301" and "302". Since only an HTTP packet transmitted from the information providing apparatus 100 that distributes a content that is a QoS target is transferred from the response packet detection section 320 to the transfer request analysis section 321, the transfer request analysis section 321 does not need to analyze an HTTP packet transmitted from the information providing apparatus 100 that distributes a content that is not a QoS target. As a result, the relay apparatus 130 can reduce a load of processing of analyzing extra HTTP packets, thereby preventing the communication throughput from decreasing owing to an increase in a load of analysis.

The domain information updating section 322 extracts a domain name from the transfer destination URL, and registers the domain name in the service information table 312. Specifically, the domain information updating section 322 confirms in which register number in the service information table 312 the address of the information providing apparatus 100 that is the transfer source is present. Since the domain name corresponding to the register number is the transfer destination URL, the domain information updating section 322 additionally registers, as a new domain name, the domain name included in the transfer destination URL, in the service information table 312, such that the domain name is associated with the transfer destination URL.

The QoS processing section 304 has a QoS processing function such as bandwidth reservation or priority control. If the QoS processing section 304 has a function of bandwidth reservation, the QoS processing section 304 reserves a bandwidth for each path between the relay apparatuses 130a to 130c in accordance with a request bandwidth, with reference to the QoS management table 315. The bandwidth reservation means that specific one of the relay apparatuses 130 occupies and uses a time slot divided from a communication channel (communication frequency) along a time axis. One example of the bandwidth reservation is TDMA (Time Division Multiple Access). Another example of the bandwidth reservation is HCCA (Hybrid Coordination Function Controlled Channel Access), which is standardized by IEEE 802.11e.

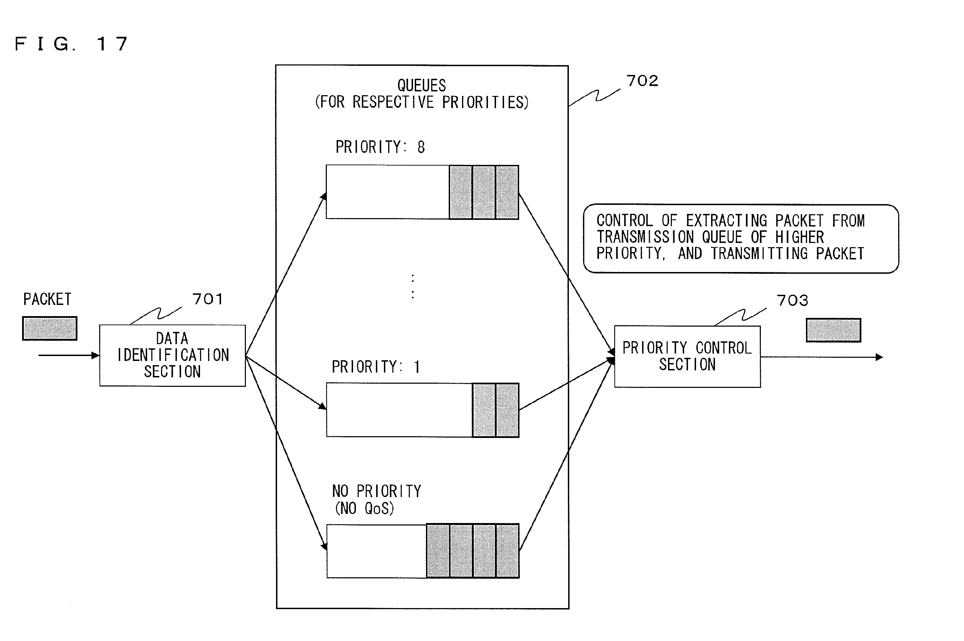

If the QoS processing section 304 has a function of priority control, the QoS processing section 304 transmits a packet in accordance with the priority corresponding to received data, with reference to the QoS management table 315. FIG. 17 is a diagram for explaining priority control processing performed by the QoS processing section 304. In the case where the QoS processing section 304 performs priority control processing, the QoS processing section 304 includes, for example, a function block as shown in FIG. 17. With reference to FIG. 17, a data identification section 701 has a function of determining whether or not the received data is a packet to be transmitted in priority. Specifically, the data identification section 701 determines whether or not the received data is a packet to be transmitted in priority, based on whether or not the received data matches data identification parameters in the QoS management table 315. Queues 702 are prepared for respective priorities. No priority (no QoS assurance), and priorities of 1 to 8 are set as the priorities, for example. A priority control section 703 performs control of extracting a packet from the queue 702 of a higher priority, and transmitting the packet. One example of the priority control is EDCA (Enhanced Distributed Channel Access), which is standardized by IEEE 802.11e. In the present embodiment, an example in which the QoS processing section 304 has the priority control function will be described.

FIG. 3 and FIG. 4 are diagrams showing in detail a memory configuration of the service information table 312 shown in FIG. 2. As shown in FIG. 3 and FIG. 4, the service information table 312 stores, an item "register No.", an item "DNS query name (domain name)", an item "service parameters", and an item "information providing apparatus address" such that they correspond to each other. The item "service parameters" includes an item "service name", an item "transmission rate (bps)", an item "priority", and an item "Layer-4 Protocol".

A domain name that is a host name of each of the information providing apparatuses 100 is stored in the item "DNS query name (domain name)". It is noted that the domain name may be an FQDN (Fully Qualified Domain Name), or may be a part of the domain name that indicates the type of a content, such as a top level domain of the domain name. A service name corresponding to the domain name is stored in the item "service name". The service name includes a providing company for the service, and the type of the content, for example.

A transmission rate indicating a request bandwidth for a content corresponding to the domain name is stored in the item "transmission rate (bps)". A priority indicating a transmission priority rank corresponding to each domain name is stored in the item "priority". The larger the value of the priority is, the higher the priority rank of the domain name is.

A communication protocol such as TCP or UDP is stored in the item "Layer-4 Protocol". This item is used for determination in which, for example, if the communication protocol is TCP, QoS processing should be performed by a two-way link, and if the communication protocol is UDP, QoS processing should be performed by only a one-way link (downlink or uplink). The address of the information providing apparatus 100 corresponding to the domain name is stored in the item "information providing apparatus address".

FIG. 3(a) shows an example of setting for the service information table 312 as it is before updating. As shown in FIG. 3(a), the service information table 312 manages two pieces of service information. The first piece of service information (register No. 1-1) is such that "xx.yy.tv" is stored in the item "domain name", "television program distribution of company X" is stored in the item "service name", "10M" is stored in the item "transmission rate (bps)", "7" is stored in the item "priority", and "TCP" is stored in the item "Layer-4 Protocol". The item "information providing apparatus address" is undetermined because it is in an initial state. That is, the first piece of service information indicates that "a content that the information providing apparatus 100 whose host name is xx.yy.tv has is distributed by a television program distribution service of company X, a bandwidth of 10M is needed on a communication path in order to distribute the content to each of the terminal apparatuses 110, and the content is transmitted with a priority of 7".

The second piece of service information (register No. 2-1) is such that "abc.xyz.com" is stored in the item "domain name", "video distribution of company A" is stored in the item "service name", "6M" is stored in the item "transmission rate (bps)", "4" is stored in the item "priority", and "UDP" is stored in the item "Layer-4 Protocol". The item "information providing apparatus address" is undetermined because it is in an initial state. That is, the second piece of service information indicates that "a content that the information providing apparatus 100 whose host name is abc.xyz.com has is distributed by a video distribution service of company A, a bandwidth of 6M is needed on a communication path in order to distribute the content to each of the terminal apparatuses 110, and the content is transmitted with a priority of 4". FIG. 3(b) shows a case where an IP address "10.20.30.1" is registered in the item "information providing apparatus address" of the first piece of service information shown in FIG. 3(a).

FIG. 4(a) and FIG. 4(b) show examples of setting for the service information table 312 as it is after updating. An example of updating of the service information table 312 will be described later.

FIG. 5 is a diagram showing an example of a memory configuration of the QoS management table 315 shown in FIG. 2. As shown in FIG. 5, the QoS management table 315 stores various QoS parameters such that an item "data identification parameters" and an item "data assurance parameters" correspond to each other. The item "data identification parameters" includes an item "source address", an item "destination address", and an item "Layer-4 Protocol". On the other hand, the item "data assurance parameters" includes an item "request bandwidth (bps)", and an item "priority". The source address and the destination address may be IP addresses, or may be MAC addresses. In the present embodiment, a case where they are IP addresses will be described.

As shown in FIG. 5(a), the first piece of service information (register No. 1) of the QoS management table 315 is such that "10.20.30.1" is set in the item "source address", "192.168.0.8" is set in the item "destination address", and "TCP" is set in the item "Layer-4 Protocol". In addition, "10M" is set in the item "request bandwidth (bps)", and "7" is set in the item "priority". That is, the register No. 1 indicates that "a content is transmitted from the information providing apparatus 100 whose IP address is 10.20.30.1 to the terminal apparatus 110 whose IP address is 192.168.0.8, with a priority of 7, or a bandwidth of 10Mbps is reserved in a communication therebetween". The description of FIG. 5(b) is omitted.

FIG. 6 is a diagram for explaining a packet configuration of a DNS packet. FIG. 6(a) shows the format of a DNS packet. FIG. 6(b) and FIG. 6(c) show DNS response packets A and B which are examples of DNS packets when values are set in their Query fields and Answer fields. As shown in FIG. 6(a), a DNS packet includes fields of "Ethernet header", "IP header", "UDP (TCP) header", "DNS message", and "FCS (Frame Check Sequence)". In addition, the "DNS message" includes fields of "DNS query name (domain name)", "Type (query type)", and "answer data".

A domain name indicating a host name of each of the information providing apparatuses 100 is stored in the "DNS query name (domain name)". The type of an IP address for which the DNS is queried is stored in the "Type (query type)". For example, if "1" is stored in the "query type", an IP address of IPv4 corresponding to a DNS query name is queried for. On the other hand, if "28" is stored in the "query type", an IP address of IPv6 corresponding to a DNS query name is queried for.

The IP address (hereinafter, referred to as answer IP address) of the information providing apparatus 100 corresponding to a domain name that has been queried about is stored in the "answer data". The terminal apparatus 110 that has received a DNS response packet sets the answer IP address as the IP address of a connection destination. In addition, if there are a plurality of the information providing apparatuses 100 corresponding to the domain name, a plurality of answer IP addresses are stored in the DNS response packet. In this case, the terminal apparatus 110 selects any one of the plurality of answer IP addresses, and sets the selected answer IP address as the IP address of a connection destination.

FIG. 7 is a diagram showing a packet configuration of an HTTP packet. As shown in FIG. 7(a), the HTTP packet includes fields of "Ethernet header", "IP header", "TCP header", "HTTP message", and "FCS". An acquisition request command such as a GET method, a response (status) code, content data, or the like is stored in the "HTTP message".

FIG. 7(b) shows an example of HTTP redirection (transfer request) in an HTTP message response. With reference to FIG. 7(b), the response code is "302", and the URL of a transfer request destination is "http://xx.yy.001.tv". FIG. 7(c) shows an HTTP message response. With reference to FIG. 7(c), the response code is "200", which indicates a normal success about the request.

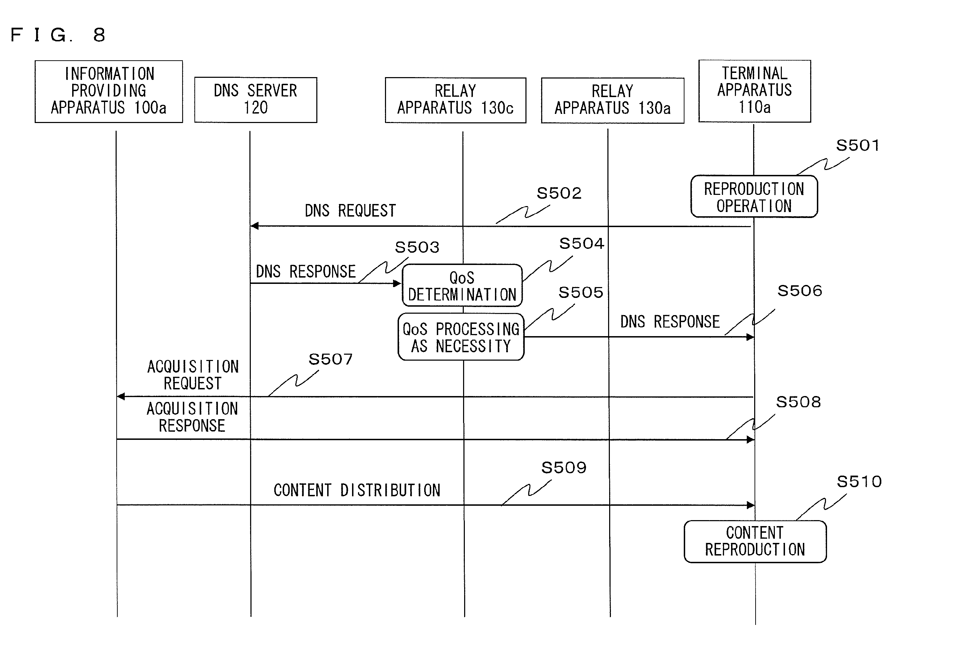

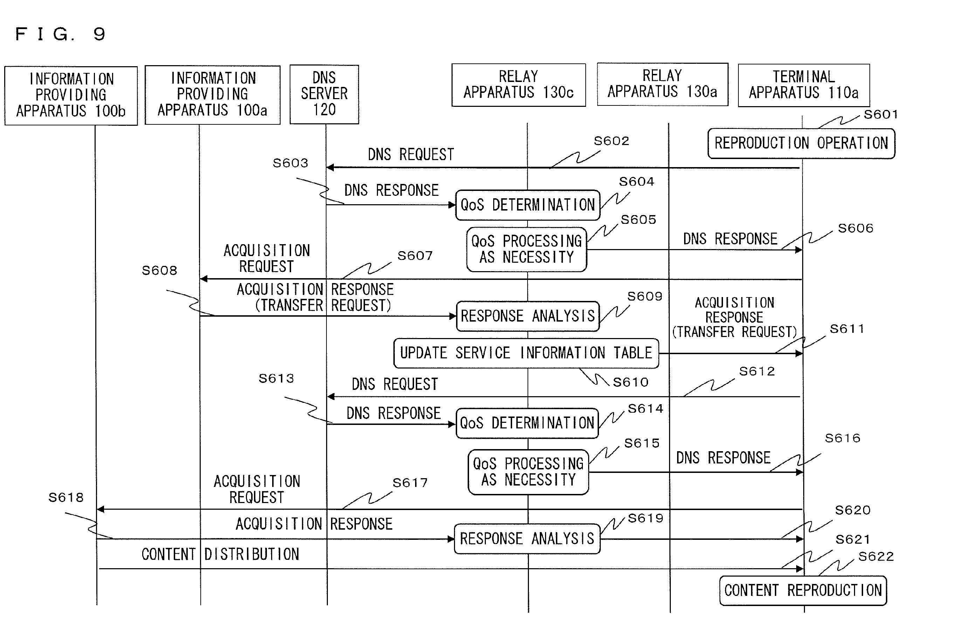

A method of table update performed by the relay apparatus 130c which is configured as described above will be described with reference to the drawings. FIG. 8 and FIG. 9 are sequence diagrams indicating operations of the apparatuses in the network according to the present embodiment. First, with reference to FIG. 8, the operations of the apparatuses in the case where, as an example, the terminal apparatus 110a shown in FIG. 1 transmits an acquisition request for a content, to the information providing apparatus 100a, and an HTTP redirection is not generated, will be described.

With reference to FIG. 8, when a user has performed an operation of reproducing a content (step S501), the terminal apparatus 110a writes the domain name "xx.yy.tv" of the information providing apparatus 100a, in a DNS request packet, and transmits the DNS request packet to the DNS server 120 (step S502).

When the DNS server 120 has received the DNS request packet via the relay apparatuses 130a and 130c, the DNS server 120 writes the IP address corresponding to the domain name of the information providing apparatus 100a, in a DNS response packet, and returns the DNS response packet to the relay apparatus 130c (step S503). The DNS response packet is shown as a DNS response packet A in FIG. 6(b). If the domain name included in the DNS request packet is "xx.yy.tv" and the Type included in the DNS request packet is "1 (= IPv4)", "10.20.30.1" which is the IP address of the information providing apparatus 100a is written in the "answer data" in the DNS response packet A.

When the relay apparatus 130c has received the DNS response packet A from the DNS server 120, the relay apparatus 130c determines whether or not QoS processing is needed for a transmission of a content corresponding to the domain name on the communication path between the relay apparatus 130c and the relay apparatus 130a (step S504). If QoS processing is needed, the relay apparatus 130c performs QoS processing (step S505). Specifically, the relay apparatus 130c determines that QoS processing is needed, if the "xx.yy.tv" which is the DNS query name of the DNS response packet A is registered in the service information table 312.

As an example, in the service information table 312 (see FIG. 3(a)), the domain name "xx.yy.tv" is registered in the register No. 1-1. Therefore, the relay apparatus 130c obtains service parameters (transmission rate of 10 Mbps, priority of 7, and TCP) corresponding to the domain name "xx.yy.tv", from the service information table 312. Next, the relay apparatus 130c causes the QoS registering section 314 to register the service parameters (transmission rate of 10 Mbps, priority of 7, and TCP) in the QoS management table 315. FIG. 5(a) shows the QoS management table 315 as it is after the setting. With reference to FIG. 5(a), the source address "10.20.30.1" is the answer IP address (the IP address of the information providing apparatus 100a) in the DNS response packet A. In addition, a destination address "192.168.0.8" is a destination address in the IP header of the DNS response packet A, which is the IP address of the terminal apparatus 110a.

Thereafter, the relay apparatus 130c returns the DNS response packet to the terminal apparatus 110a via the relay apparatus 130a (step S506). When the terminal apparatus 110a has received the DNS response packet via the relay apparatus 130a, the terminal apparatus 110a refers to the answer IP address included in the DNS response packet. In this case, the IP address of the information providing apparatus 100a has been written as the answer IP address. Therefore, the terminal apparatus 110a transmits a content acquisition request whose destination is the information providing apparatus 100a (step S507).

When the information providing apparatus 100a has received the acquisition request for a content via the relay apparatuses 130a and 130c, the information providing apparatus 100a transmits an acquisition response (step S508). In addition, the information providing apparatus 100a immediately distributes the content to the terminal apparatus 110a (step S509). The terminal apparatus 110a receives the content from the information providing apparatus 100a, and reproduces the content (step S510). During the distribution of the content, when the relay apparatus 130c has received the content that matches the data identification parameters in the QoS management table 315, the relay apparatus 130c performs QoS processing of priority control based on the data assurance parameter, thereby realizing communication quality assurance on the path between the relay apparatus 130c and the relay apparatus 130a.

FIG. 9 is a sequence diagram indicating operations of the apparatuses on the network according to the present embodiment, in the case where an information providing apparatus that transmits a content is changed from the information providing apparatus 100a to the information providing apparatus 100b, that is, HTTP redirection is used. In this case, the relay apparatus 130c analyzes an acquisition response (transfer request) from the information providing apparatus 100a, and then updates the service information table 312.

With reference to FIG. 9, when the user has performed an operation of reproducing a content (step S601), the terminal apparatus 110a writes the domain name "xx.yy.tv" of the information providing apparatus 100a, in a DNS request packet, and transmits the DNS request packet to the DNS server 120 (step S602). When the DNS server 120 has received the DNS request packet via the relay apparatuses 130a and 130c, the DNS server 120 writes the IP address of the information providing apparatus 100a corresponding to the domain name, in a DNS response packet, and returns to the DNS response packet to the relay apparatus 130c (step S603). The DNS response packet is shown as the DNS response packet A in FIG. 6(b). If the domain name included in the DNS request packet is "xx.yy.tv" and the Type included in the DNS request packet is "1 (= IPv4)", "10.20.30.1" which is the IP address of the information providing apparatus 100a is written in the "answer data" in the DNS response packet A.

When the relay apparatus 130c has received the DNS response packet A from the DNS server 120, the relay apparatus 130c determines whether or not QoS processing is needed for a transmission of a content corresponding to the domain name "xx.yy.tv" on the communication path between the relay apparatus 130c and the relay apparatus 130a (step S604). If QoS processing is needed, the relay apparatus 130c performs QoS processing (step S605). Specifically, the relay apparatus 130c determines that QoS processing is needed, if the DNS query name "xx.yy.tv" of the DNS response packet A is registered in the service information table 312.

For example, in the service information table 312 (see FIG. 3(a)), the domain name "xx.yy.tv" is registered in the register No. 1-1. Therefore, the relay apparatus 130c obtains the service parameters (transmission rate of 10 Mbps, priority of 7, and TCP) corresponding to the domain name "xx.yy.tv", from the service information table 312. Next, the relay apparatus 130c stores the answer IP address included in the DNS response packet A, in the service information table 312. FIG. 3(b) indicates that the IP address "10.20.30.1" of the information providing apparatus 100a is stored in the service information table 312.

Next, the relay apparatus 130c causes the QoS registering section 314 to register service parameters (transmission rate of 10 Mbps, priority of 7, and TCP) in the QoS management table 315. FIG. 5(a) shows the QoS management table 315 as it is after the setting. With reference to FIG. 5(a), the source address "10.20.30.1" is the answer IP address (the IP address of the information providing apparatus 100a) in the DNS response packet A. In addition, the destination address "192.168.0.8" is a destination IP address in the IP header of the DNS response packet A, which is the IP address of the terminal apparatus 110a.

Thereafter, the relay apparatus 130c returns the DNS response packet A to the terminal apparatus 110a via the relay apparatus 130a (step S606). When the terminal apparatus 110a has received the DNS response packet A via the relay apparatus 130a, the terminal apparatus 110a refers to the answer IP address included in the DNS response packet A. In this case, the IP address of the information providing apparatus 100a has been written as the answer IP address. Therefore, the terminal apparatus 110a transmits a content acquisition request whose destination is the information providing apparatus 100a (step S607).

When the information providing apparatus 100a has received the content acquisition request, the information providing apparatus 100a transmits a transfer request (acquisition response) for requesting transfer to the information providing apparatus 100b (step S608) because the information providing apparatus 100a recognizes that the requested content is present in the information providing apparatus 100b. The transfer request includes the domain name "http://xx.yy.001.tv" of the information providing apparatus 100b. The information providing apparatus 100a transmits the transfer request by using, for example, the HTTP redirection shown in FIG. 7(b).

In the the relay apparatus 130c, when the response packet detection section 320 has detected the acquisition response from the information providing apparatus 100a, the transfer request analysis section 321 determines whether or not the detected acquisition response is a transfer request (step S609). This determination is performed by checking the response code of the HTTP message. Since the response code in the HTTP message shown in FIG. 7(b) is "302", the acquisition response is determined to be a transfer request. In the relay apparatus 130c, the transfer request analysis section 321 obtains a transfer destination URL in the Location header included in the HTTP message. The transfer destination URL is the domain name "xx.yy.001.tv"of the information providing apparatus 100b.

The relay apparatus 130c causes the domain information updating section 322 to register the domain name of the information providing apparatus 100b in the service information table 312, thereby updating the service information table 312 (step S610). Specifically, the relay apparatus 130c confirms in which register number in the service information table 312 the IP address "10.20.30.1" of the information providing apparatus 100a is stored. In the example of the service information table 312 shown in FIG. 3(b), the IP address "10.20.30.1" is stored in the register No. 1-1. Therefore, the domain information updating section 322 can set the domain name "xx.yy.001.tv" of the information providing apparatus 100b, as a transfer destination from the domain name "xx.yy.tv" of the information providing apparatus 100a.

Next, the domain information updating section 322 additionally registers the domain name of the information providing apparatus 100b in a register No. 1-2 of the service information table 312, as shown in FIG. 4(a). At this time, service parameters are copied from the register No. 1-1 to the register No. 1-2. Thereafter, the relay apparatus 130c transmits the acquisition response to the terminal apparatus 110a (step S611).

When the terminal apparatus 110a has recognized HTTP redirection of the acquisition response, the terminal apparatus 110a transmits a DNS request packet to the DNS server 120 in order to examine the IP address of the information providing apparatus 100b (step S612). The domain name "xx.yy.001.tv" of the information providing apparatus 100b is written in the DNS request packet.

When the DNS server 120 has received the DNS request packet, the DNS server 120 writes, in a DNS response packet, the IP address of the information providing apparatus 100b corresponding to the domain name, and returns the DNS response packet to the relay apparatus 130c (step S613). The DNS response packet is shown as a DNS response packet B in FIG. 6(c). In the case where the domain name of the information providing apparatus 100b included in the DNS request packet is "xx.yy.001.tv", and the Type is "1 (= IPv4)", "10.20.30.3" which is the IP address of the information providing apparatus 100b is written in the "answer data" in the DNS response packet B.

When the relay apparatus 130c has received the DNS response packet B from the DNS server 120, the relay apparatus 130c determines whether or not QoS processing is needed for transmission of a content corresponding to the domain name "xx.yy.001.tv" on the communication path between the relay apparatus 130c and the relay apparatus 130a (step S614). If QoS processing is needed, the relay apparatus 130c performs QoS processing (step S615). Specifically, the relay apparatus 130c determines whether or not QoS processing is needed, based on whether or not the DNS query name "xx.yy.001.tv" of the DNS response packet B is registered in the service information table 312.

As a result of the processing of step S610 in FIG. 9, the domain name "xx.yy.001.tv" is registered in register No. 1-2 of the service information table 312 (see FIG. 4(a)), for example. Therefore, the relay apparatus 130c obtains the service parameters (transmission rate of 10 Mbps, priority of 7, and TCP) for the domain name. Next, the relay apparatus 130c stores the answer IP address included in the DNS response packet B, in the service information table 312. FIG. 4(b) shows the service information table 312 in which the IP address "10.20.30.3" of the information providing apparatus.

Next, the relay apparatus 130c causes the QoS registering section 314 to register the service parameters (transmission rate of 10 Mbps, priority of 7, and TCP) in the QoS management table 315. FIG. 5(b) shows the QoS management table 315 as it is after the setting. Here, a source address "10.20.30.3" is the answer IP address (the IP address of the information providing apparatus 100b) in the DNS response packet B. In addition, a destination address "192.168.0.8" is the destination IP address in the IP header of the DNS response packet B, which is the IP address of the terminal apparatus 110a.

Thereafter, the relay apparatus 130c returns the DNS response packet B to the terminal apparatus 110a via the relay apparatus 130a (step S616). When the terminal apparatus 110a has received the DNS response packet B via the relay apparatus 130a, the terminal apparatus 110a refers to the answer IP address included in the DNS response packet B. In this case, the IP address of the information providing apparatus 100b has been written as the answer IP address. Therefore, the terminal apparatus 110a transmits a content acquisition request whose destination is the information providing apparatus 100b (step S617).

When the information providing apparatus 100b has received the content acquisition request, the information providing apparatus 100b transmits an acquisition response (step S618). For example, the information providing apparatus 100b transmits, as an acquisition response, an HTTP packet shown in FIG. 7(c). When the response packet detection section 320 of the the relay apparatus 130c has detected the acquisition response from the information providing apparatus 100b, the the relay apparatus 130c determines whether or not the detected acquisition response is a transfer request (step S619). This determination is performed by checking the response code of the HTTP message. Since the response code in the HTTP message shown in FIG. 7(c) is "200", the acquisition response is determined to not be a transfer request. In the case where the acquisition response is not a transfer request, the relay apparatus 130c does not update the service information table 312.

Thereafter, the relay apparatus 130c transmits the acquisition response to the terminal apparatus 110a (step S620). The information providing apparatus 100b distributes the content to the terminal apparatus 110a (step S621) immediately after transmitting the acquisition response. In addition, the acquisition response transmitted by the information providing apparatus 100b can also include a part of the content.

The terminal apparatus 110a receives the content from the information providing apparatus 100b, and reproduces the content (step S622). During the distribution of the content, when the relay apparatus 130c has received a packet that matches the data identification parameters in the QoS management table 315, the relay apparatus 130c performs QoS processing of priority control based on the data assurance parameter, thereby realizing communication quality assurance on the path between the relay apparatus 130c and the relay apparatus 130a.

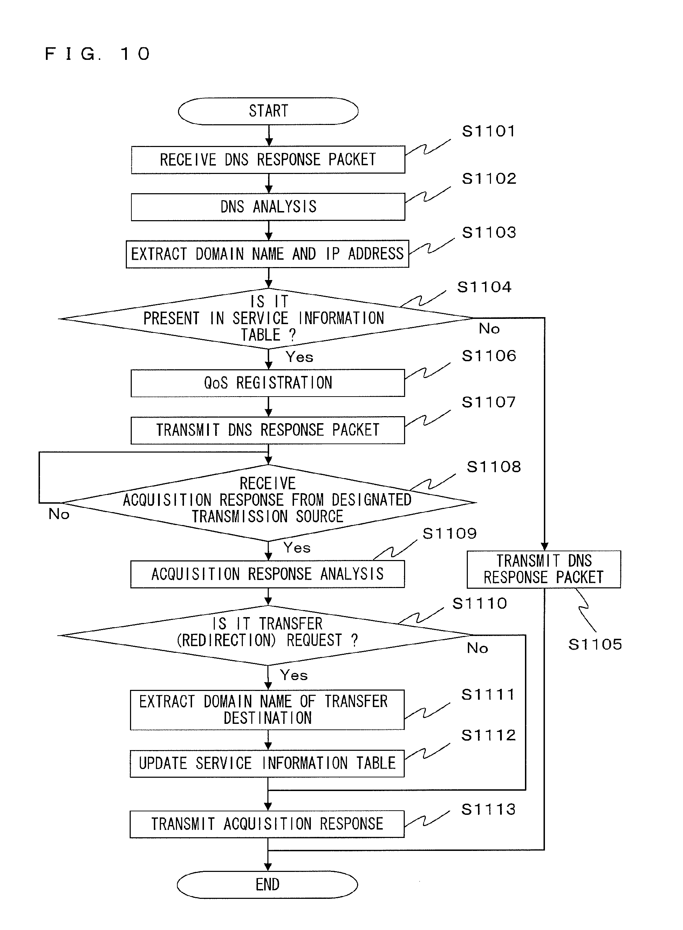

FIG. 10 is a flowchart showing, in detail, operation of the relay apparatus 130c in steps S604, S605, S609, and S610 in FIG. 9. In the relay apparatus 130c, the DNS detection section 310 determines the type of the data received by the reception section 302, thereby determining that the received data is the DNS response packet A (step S1101). The DNS analysis section 311 analyzes the DNS response packet A (step S1102), and obtains a query name (domain name) and an answer IP address (step S1103).

Next, the QoS necessity determination section 313 determines whether or not the obtained domain name is present in the service information table 312 (step S1104). If the obtained domain name is not present in the service information table 312, the QoS necessity determination section 313 determines that QoS processing is not needed for a transmission of the content. In this case, the relay apparatus 130c transmits the DNS response packet without performing QoS processing (step S1105). On the other hand, if the obtained domain name is present in the service information table 312, the QoS necessity determination section 313 causes the QoS registering section 314 to register, in the QoS management table 315, the service parameters and the answer IP address included in the service information table 312 (step S1106). In addition, the QoS necessity determination section 313 stores the answer IP address in the "information providing apparatus address", corresponding to the obtained domain name, of the service information table 312.

Next, the relay apparatus 130c transmits the DNS response packet A (step S1107). Thereafter, when the relay apparatus 130c has received an acquisition response from the information providing apparatus 100a corresponding to the answer IP address (step S1108), the relay apparatus 130c analyzes the acquisition response (step S1109, step S609 in FIG. 9). If the acquisition response is not a transfer request (HTTP redirection), the relay apparatus 130c transmits the acquisition response (step S1113).

On the other hand, if the acquisition response is a transfer request (HTTP redirection), the relay apparatus 130c extracts the domain name of the information providing apparatus 100b which is the transfer destination, from a transfer destination URL included in the transfer request (step S1111). Thereafter, the relay apparatus 130c updates the service information table 312 such that the domain name of the information providing apparatus 100a is associated with the domain name of the information providing apparatus 100b (step S1112). FIG. 3(b) shows the service information table as it is before updating, and FIG. 4(a) shows the service information table as it is after updating. The "information providing apparatus address" in the service information table 312 is used for the association. Thereafter, the relay apparatus 130c transmits the acquisition response (step S1113, step S611 in FIG. 9).

As described above, in the first embodiment of the present invention, even if an information providing apparatus that is supposed to be connected is changed to an information providing apparatus having a different domain name, the relay apparatus 130c analyzes a transfer request (HTTP redirection) transmitted to a terminal apparatus by an information providing apparatus, detects a change of the domain name of the information providing apparatus, and updates the service information table 312 including the domain name and the service parameters corresponding to the domain name. Thus, the relay apparatus can assure a communication quality by identifying a content distributed by the information providing apparatus having a different domain name, and performing QoS processing. As a result, the user can view and listen to a content with a high quality, in which interruption or disturbance of video does not occur.

In addition, resources such as a CPU (Central Processing Unit) and a memory included in the relay apparatus 130c are optimized for functions of relaying and transferring data. Therefore, if the relay apparatus 130c performs processing of analyzing the payload (message) sections of all HTTP packets, a communication throughput (communication rate) might decrease owing to increase in a load on the CPU (CPU utilization). Therefore, the relay apparatus 130c designates the IP address, included in the DNS response packet, of an information providing apparatus that transmits a content that is a QoS target, and analyzes the payload section of an HTTP packet transmitted from the information providing apparatus. The relay apparatus 130c does not analyze an HTTP packet transmitted from a server other than the information providing apparatus having the designated IP address. Thus, the relay apparatus does not need to perform processing of analyzing the payload (message) sections of all HTTP packets, thereby suppressing increase in a load on the CPU, and avoiding decrease in a communication throughput.

### (Second embodiment)

In the first embodiment, the relay apparatus 130 determines necessity of QoS processing, based on a domain name in the DNS response packet. If QoS processing is needed, the relay apparatus 130 performs QoS processing, and analyzes an acquisition response transmitted from the information providing apparatus 100a to the terminal apparatus 110a. If the acquisition response is a transfer request for requesting transfer to another information providing apparatus 100b, the relay apparatus 130 additionally registers the domain name of the transfer destination in the service information table 312. As a result, when a content is distributed by the information providing apparatus 100b having a different domain name, the relay apparatus 130 can prevent a disturbed video from being distributed because of QoS processing not being performed.

On the other hand, in the second embodiment, a case where: a DNS response packet includes an alias domain name as a CNAME (Canonical NAME for an alias); the relay apparatus 130c extracts the alias domain name from the DNS response packet; and updates the service information table 312, will be described. Thus, when a content is distributed by an information providing apparatus 100 having an alias domain name, the relay apparatus 130c can prevent a disturbed video from being distributed because of QoS processing not being performed.

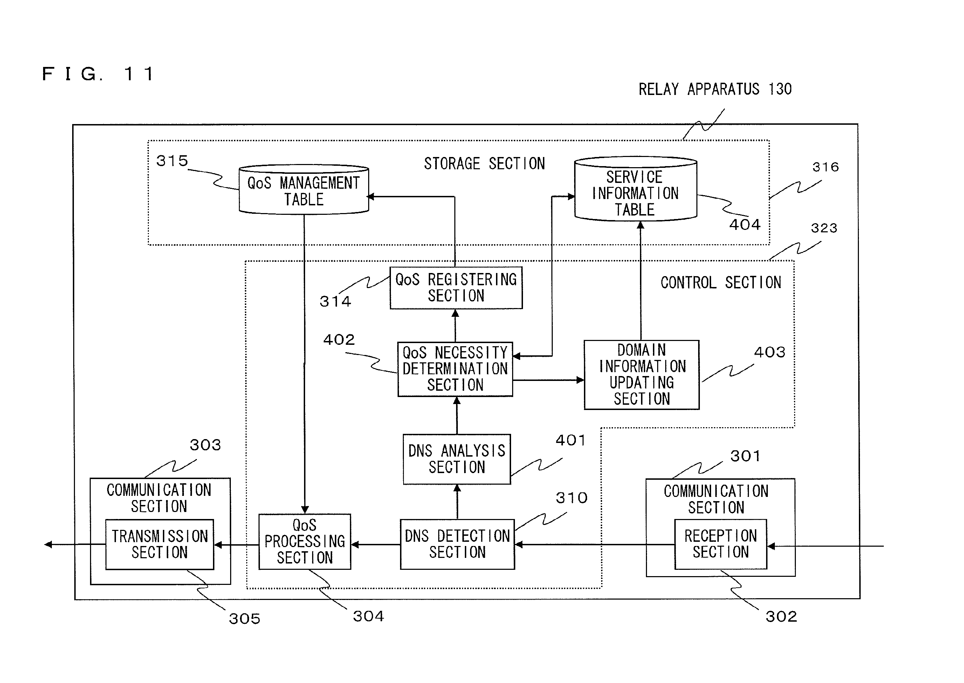

A configuration of a network in the second embodiment of the present invention is the same as that shown in FIG. 1 in the first embodiment, and the description thereof is omitted here. FIG. 11 is a function block diagram of each of the relay apparatuses 130 according to the second embodiment of the present invention. The same components as the function blocks shown in FIG. 2 are denoted by the same reference numerals as in the first embodiment, and the description thereof is omitted here.

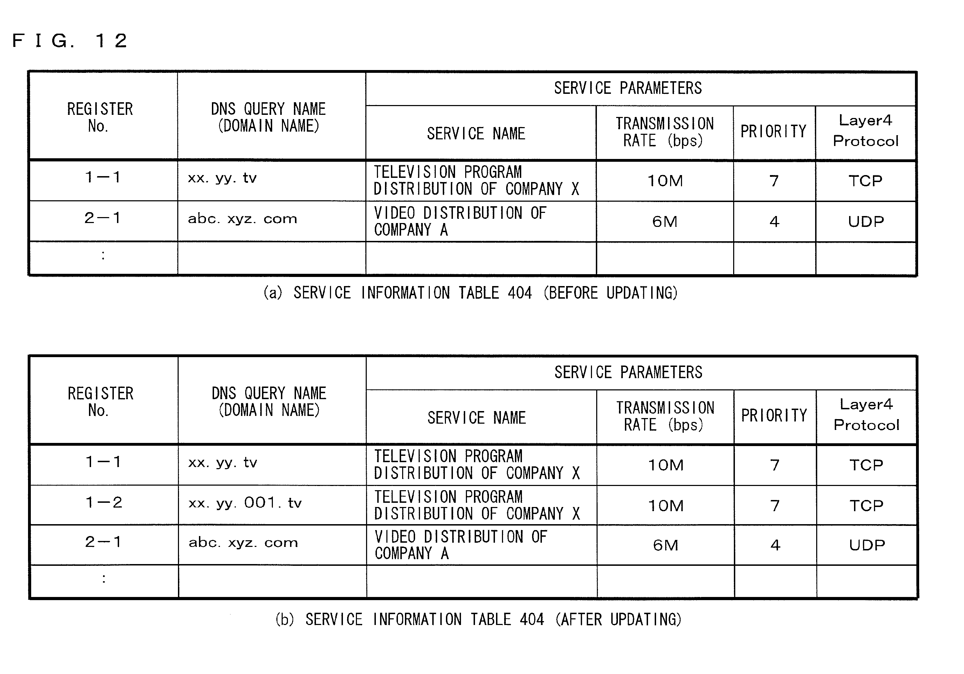

As shown in FIG. 11, a service information table 404 stores a domain name indicating the type of content, and various parameters (hereinafter, referred to as service parameters) associated with the domain name, such that they correspond to each other. The service parameters include the names of services provided by the information providing apparatuses 100, request bandwidths and priorities for contents corresponding to the domain names, and the like. It is noted that the details of the service information table 404 will be described later with reference to FIG. 12.

The service information table 404 is different from the service information table 312 according to the first embodiment in whether or not the item "information providing apparatus address" is present. The "information providing apparatus address" in the service information table 312 is used for associating a domain name to be additionally registered with a domain name that is currently registered. However, in the second embodiment, a domain name to be additionally registered can be associated with a domain name that is currently registered, without using the "information providing apparatus address". Therefore, the item "information providing apparatus address" is removed from the service information table 404. In addition, a domain name is the same as in the first embodiment, and therefore the description thereof is omitted.

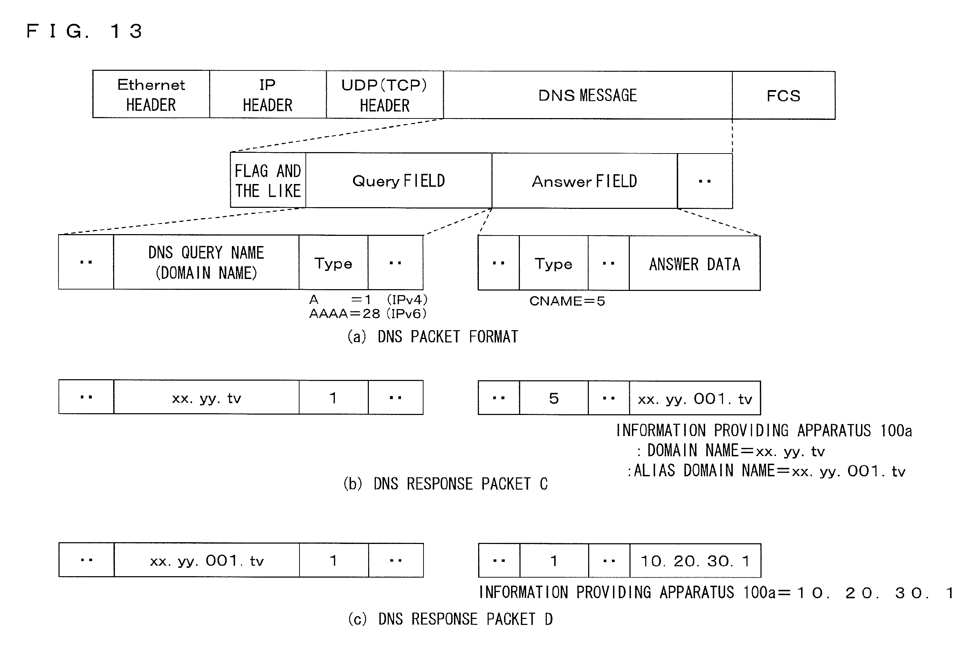

The DNS analysis section 401 extracts a DNS query name (domain name), Type, and answer data included in a received DNS response packet, and transfers them to the QoS necessity determination section 402. It is noted that a configuration of a DNS packet will be described later with reference to FIG. 13. If the Type included in the DNS response packet is 1 or 28, the answer data includes an IP address. On the other hand, if the Type is 5, which relates to a CNAME indicating an alias domain name, the answer data includes the alias domain name.

The QoS necessity determination section 402 checks the Type transferred from the DNS analysis section 401. If the Type is 1 or 28, the QoS necessity determination section 402 operates in the same manner as the QoS necessity determination section 313 shown in FIG. 2. Therefore, the description thereof is omitted here. On the other hand, if the Type is 5 (= CNAME), the QoS necessity determination section 402 confirms whether or not the domain name transferred from the DNS analysis section 401 is registered in the service information table 404. If the domain name is not registered in the service information table 404, the QoS necessity determination section 402 determines that QoS processing is not needed for a service corresponding to the domain name, and finishes the control. On the other hand, if the domain name is registered in the service information table 404, the QoS necessity determination section 402 determines that QoS processing is needed for a service corresponding to the domain name, and transfers the alias domain name which is the answer data, and the DNS query name (domain name) to the domain information updating section 403.

The domain information updating section 403 registers the transferred alias domain name in the service information table 404. Specifically, the domain information updating section 403 confirms in which register number in the service information table 404 the DNS query name is present. If an alias name of the domain name corresponding to the register number is the alias domain name transferred from the QoS necessity determination section 402, the domain information updating section 403 additionally registers the alias domain name in the service information table 404, such that the domain name is associated with the alias domain name.

FIG. 12 is a diagram showing in detail a memory configuration of the service information table 404 shown in FIG. 11. As shown in FIG. 12(a), the service information table 404 stores an item "DNS query name (domain name)" and an item "service parameters" such that they correspond to each other. The item "service parameters" includes an item "service name", an item "transmission rate (bps)", an item "priority", and an item "Layer-4 Protocol". A domain name that is a host name of each of the information providing apparatuses 100 is stored in the item "DNS query name (domain name)". It is noted that the domain name may be an FQDN (Fully Qualified Domain Name), or may be a part of the domain name that indicates the type of a content, such as a top level domain of the domain name.

A service name corresponding to the domain name is stored in the item "service name". The service name includes a providing company for the service, and the type of the content, for example. A transmission rate indicating a request bandwidth for a content corresponding to the domain name is stored in the item "transmission rate (bps)". A priority indicating a transmission priority rank corresponding to each domain is stored in the item "priority". The larger the value of the priority is, the higher the priority rank of the domain name is.

A communication protocol such as TCP or UDP is stored in the item "Layer-4 Protocol". This item is used for determination in which, for example, if the communication protocol is TCP, QoS processing should be performed by a two-way link, and if the communication protocol is UDP, QoS processing should be performed by only a one-way link (downlink or uplink).

As shown in FIG. 12(a), the service information table 404 manages two pieces of service information. The first piece of service information (register No. 1-1) is such that "xx.yy.tv" is stored in the item "domain name", "television program distribution of company X" is stored in the item "service name", "10M" is stored in the item "transmission rate (bps)", "7" is stored in the item "priority", and "TCP" is stored in the item "Layer-4 Protocol". That is, the first piece of service information indicates that "a content that the information providing apparatus 100 whose host name is xx.yy.tv has is distributed by a television program distribution service of company X, a bandwidth of 10M is needed on a communication path in order to distribute the content to each of the terminal apparatuses 110, and the content is transmitted with a priority of 7".

The second piece of service information (register No. 2-1) is such that "abc.xyz.com" is stored in the item "domain name", "video distribution of company A" is stored in the item "service name", "6M" is stored in the item "transmission rate (bps)", "4" is stored in the item "priority", and "UDP" is stored in the item "Layer-4 Protocol". That is, the second piece of service information indicates that "a content that the information providing apparatus 100 whose host name is abc.xyz.com has is distributed by a video distribution service of company A, a bandwidth of 6M is needed on a communication path in order to distribute the content to each of the terminal apparatuses 110, and the content is transmitted with a priority of 4".

FIG. 13 is a diagram for explaining a packet configuration of a DNS packet. FIG. 13(a) shows the format of a DNS packet. FIG. 13(b) and FIG. 13(c) show DNS response packets C and D which are examples of DNS packets when values are set in their Query fields and Answer fields. As shown in FIG. 13(a), a DNS packet includes fields of "Ethernet header", "IP header", "UDP (TCP) header", "DNS message", and "FCS". In addition, the "DNS message" includes fields of "DNS query name (domain name)", "Type (query type)", and "answer data".

FIG. 13(b) shows an example of the DNS response packet C. As shown in FIG. 13(b), the domain name "xx.yy.tv" which indicates the host name of the information providing apparatus 100a is stored in the "DNS query name (domain name)". The type of an IP address for which the DNS is queried is stored in the "Type (query type)". If "5" is stored in the "Type", the answer data includes an alias domain name corresponding to a DNS query name. The "xx.yy.001.tv" which is an alias domain name of the information providing apparatus 100a is stored in the "answer data".

In the case where, in the DNS response packet C, the Type is 5 (= CNAME), and the alias domain name is stored in the answer data, when the terminal apparatus 110a has received the DNS response packet C, the terminal apparatus 110a transmits, to the DNS server 120, a DNS request packet in which the alias domain name of the information providing apparatus 100a is stored as the "DNS query name". Thereafter, the terminal apparatus 110a receives the DNS response packet D as shown in FIG. 13(c), from the DNS server 120. The IP address "10.20.30.1" corresponding to the alias domain name "xx.yy.001.tv" of the information providing apparatus 100a has been written in the DNS response packet D. When the terminal apparatus 110a has received the DNS response packet D, the terminal apparatus 110a sets, as the IP address of a connection destination, the IP address of the information providing apparatus 100a included in the answer IP address.

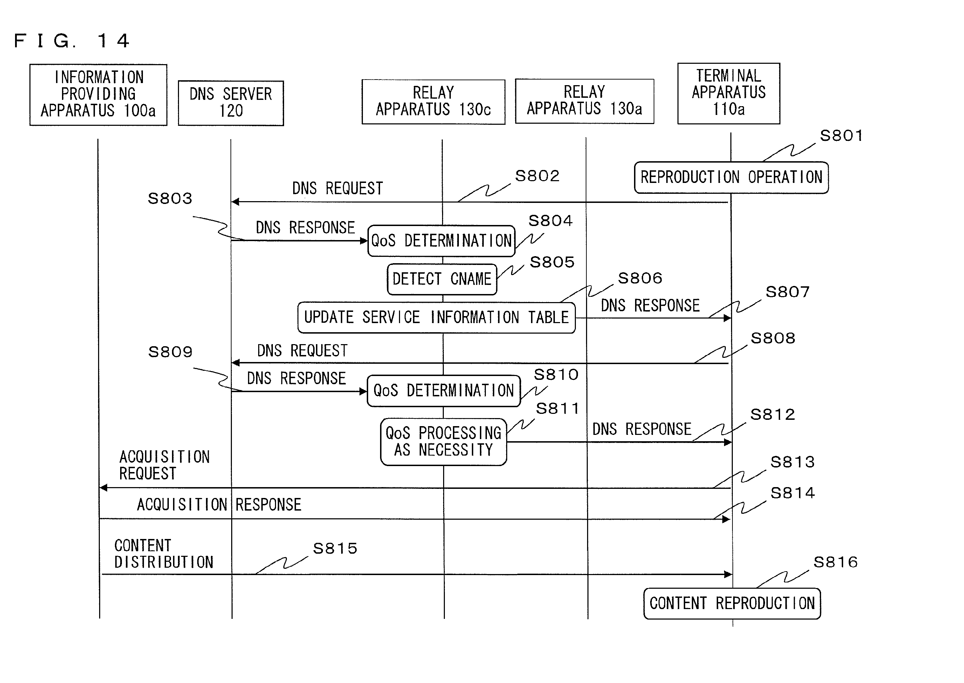

Hereinafter, a method of table update performed by the relay apparatus 130c which are configured as described above will be described with reference to the drawings. FIG. 14 is a sequence diagram indicating operations of the apparatuses in the network according to the second embodiment of the present invention. In this case, the relay apparatus 130c receives the DNS response packet C (FIG. 13(b)) having a CNAME, from the DNS server 120, analyzes the DNS response packet C, and updates the service information table 404.

With reference to FIG. 14, when a user has performed an operation of reproducing a content (step S801), the terminal apparatus 110a writes the domain name "xx.yy.tv" of the information providing apparatus 100a, in a DNS request packet, and transmits the DNS request packet to the DNS server 120 (step S802). When the DNS server 120 has received the DNS request packet, the DNS server 120 writes the alias domain name of the information providing apparatus 100a, in a DNS response packet, and returns the DNS response packet to the relay apparatus 130c (step S803). The DNS response packet is shown as the DNS response packet C in FIG. 13(b). If the domain name included in the DNS request packet is "xx.yy.tv" and the Type included in the DNS request packet is "1 (= IPv4)", "5 (= CNAME)" is written in the Type in the DNS response packet C, and "xx.yy.001.tv" which is the alias domain name of the information providing apparatus 100a is written in the answer data.

When the relay apparatus 130c has received the DNS response packet C from the DNS server 120, the relay apparatus 130c determines whether or not QoS processing is needed for a transmission of a content corresponding to the domain name on the communication path between the relay apparatus 130c and the relay apparatus 130a (step S804). Specifically, the relay apparatus 130c determines whether or not QoS processing is needed, based on whether or not the "xx.yy.tv" which is the DNS query name of the DNS response packet C is registered in the service information table 404. As shown in FIG. 12(a), "xx.yy.tv" is registered in No. 1-1 of the service information table 404. Therefore, the relay apparatus 130c determine that QoS processing is needed.

Next, the relay apparatus 130c checks whether or not the Type included in the DNS response packet C is 5 (= CNAME) (step S805). Here, if the Type is 1 or 28, as in the first embodiment, the relay apparatus 130c obtains the service parameters corresponding to the domain name from the the service information table 404, and causes the QoS registering section 314 to register the obtained service parameters in the QoS management table 315.

On the other hand, if the Type is 5, the alias domain name of the information providing apparatus 100a, instead of the IP address, has been written in the answer data in the DNS response packet C. The relay apparatus 130c causes the domain information updating section 403 to register the alias domain name "xx.yy.001.tv" of the information providing apparatus 100a in the service information table 404, thereby updating the service information table 404 (step S806).

Specifically, the relay apparatus 130c confirms in which register number in the service information table 404 the DNS query name "xx.yy.tv" in the DNS response packet C is stored. In the example shown in FIG. 12(a), the "xx.yy.tv" is stored in the register No. 1-1. The domain information updating section 403 can set the "xx.yy.001.tv" as an alias name of the domain name "xx.yy.tv" of the information providing apparatus 100a. The domain information updating section 403 additionally registers the domain name of the information providing apparatus 100a in a register No. 1-2, as shown in FIG. 12(b). At this time, service parameters are copied from the register No. 1-1 to the register No. 1-2. Thereafter, the relay apparatus 130c returns the DNS response packet C to the terminal apparatus 110a via the relay apparatus 130a (step S807).

When the terminal apparatus 110a has received the DNS response packet C, the terminal apparatus 110a refers to the Type and the answer data included in the DNS response packet C. In this case, the alias domain name "xx.yy.001.tv" of the information providing apparatus 100a has been written in the answer data. Therefore, the terminal apparatus 110a transmits a DNS request packet whose DNS query name is the alias domain name, to the DNS server 120 in order to examine the IP address corresponding to the alias domain name (step S808).

When the DNS server 120 has received the DNS request packet, the DNS server 120 writes, in a DNS response packet, the IP address of the information providing apparatus 100a corresponding to the alias domain name, and returns the DNS response packet to the relay apparatus 130c (step S809). The DNS response packet is shown as the DNS response packet D in FIG. 13(c). In the case where the alias domain name of the information providing apparatus 100a included in the DNS request packet is "xx.yy.001.tv", and the Type is "1 (= IPv4)", "10.20.30.1" which is the IP address of the information providing apparatus 100a is written in the "answer data" in the DNS response packet D.

When the relay apparatus 130c has received the DNS response packet D from the DNS server 120, the relay apparatus 130c determines whether or not QoS processing is needed for transmission of a content corresponding to the domain name on the communication path between the relay apparatus 130c and the relay apparatus 130a (step S810). If QoS processing is needed, the relay apparatus 130c performs QoS processing (step S811). Specifically, the relay apparatus 130c determines whether or not QoS processing is needed, based on whether or not the "xx.yy.001.tv" which is the DNS query name of the DNS response packet D is registered in the service information table 404.

As a result of the processing of step S806 in FIG. 14 performed by the relay apparatus 130c, the domain name "xx.yy.001.tv" is registered in register No. 1-2 of the service information table 404 (see FIG. 12(b)), for example. Therefore, the relay apparatus 130c obtains the service parameters (transmission rate of 10 Mbps, priority of 7, and TCP) for the domain name, from the service information table 404. Next, the relay apparatus 130c causes the QoS registering section 314 to register the service parameters (transmission rate of 10 Mbps, priority of 7, and TCP) in the QoS management table 315. A method of registration in the QoS management table 315 is the same as in the first embodiment, and the description thereof is omitted. Thereafter, the relay apparatus 130c returns the DNS response packet D to the terminal apparatus 110a via the relay apparatus 130a (step S812).

When the terminal apparatus 110a has received the DNS response packet D via the relay apparatus 130a, the terminal apparatus 110a refers to the answer IP address included in the DNS response packet D. In this case, the IP address of the information providing apparatus 100a has been written as the answer IP address. Therefore, the terminal apparatus 110a transmits a content acquisition request whose destination is the information providing apparatus 100a (step S813).

The information providing apparatus 100a transmits an acquisition response to the content acquisition request, to the terminal apparatus 110a (step S814). For example, the information providing apparatus 100a transmits, as an acquisition response, an HTTP packet shown in FIG. 7(c). The information providing apparatus 100a distributes the content to the terminal apparatus 110a (step S815) immediately after transmitting the acquisition response. In addition, the acquisition response transmitted by the information providing apparatus 100a can also include a part of the content. The terminal apparatus 110a receives the content from the information providing apparatus 100a, and reproduces the content (step S816). During the distribution of the content, when the relay apparatus 130c has received a content that matches the data identification parameters in the QoS management table 315, the relay apparatus 130c performs QoS processing of priority control based on the data assurance parameter, thereby realizing communication quality assurance on the path between the relay apparatus 130c and the relay apparatus 130a.

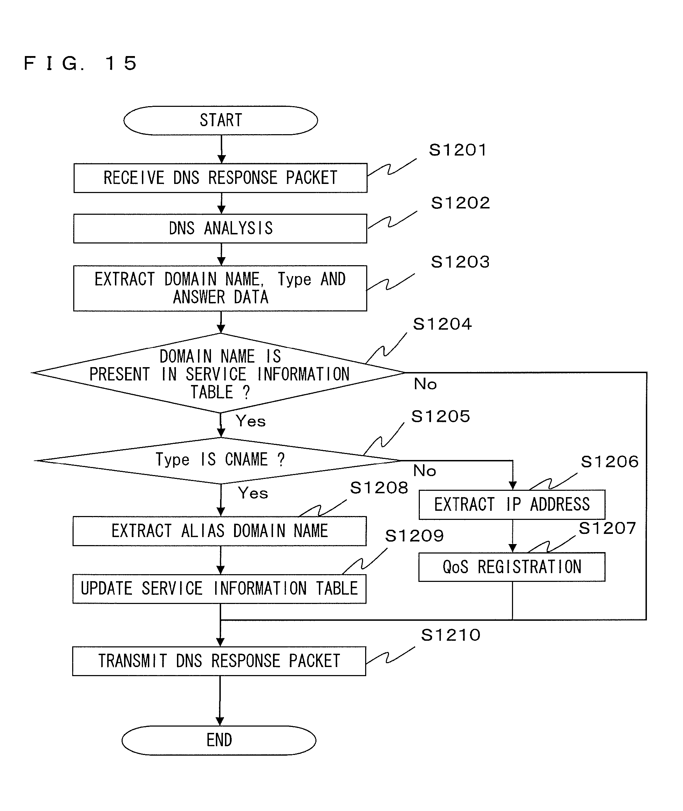

FIG. 15 is a flowchart showing operation of the relay apparatus 130c in steps S804, S805, and S806 in FIG. 14. In the relay apparatus 130c, the DNS detection section 310 determines the type of the data received by the reception section 302, thereby determining that the received data is a DNS response packet C (step S1201). The DNS analysis section 311 analyzes the DNS response packet C (step S1202), and obtains the query name (domain name), the Type, and the answer data (step S1203).

Next, the QoS necessity determination section 402 determines whether or not the obtained domain name is present in the service information table 404 shown in FIG. 12 (step S1204). If the obtained domain name is not present in the service information table 404, the QoS necessity determination section 402 determines that QoS processing is not needed for a transmission of the content, and transmits the DNS response packet (step S1210). On the other hand, if the obtained domain name is present in the service information table 404, the QoS necessity determination section 402 determines whether or not the Type is a CNAME (=5) (step S1205).

If the Type is not a CNAME, the QoS necessity determination section 402 obtains the IP address of the information providing apparatus 100a, which is the answer data (step S1206), and causes the QoS registering section 314 to register, in the QoS management table 315, the service parameters and the answer IP address included in the service information table 404 that correspond to the domain name (step S1207). Thereafter, the relay apparatus 130c transmits the DNS response packet (step S1210).

On the other hand, if the Type is a CNAME in step S1205, the QoS necessity determination section 402 obtains the alias domain name of the information providing apparatus 100a, which is the answer data (step S1208). Thereafter, the QoS necessity determination section 402 updates the service information table 404 such that the domain name "xx.yy.tv" of the information providing apparatus 100a is associated with the alias domain name "xx.yy.001.tv" of the information providing apparatus 100a (step S1209). FIG. 12(a) shows the service information table as it is before updating, and FIG. 12(b) shows the service information table as it is after updating. Thereafter, the relay apparatus 130c transmits the DNS response packet C (step S1210).

As described above, in the second embodiment of the present invention, even if a DNS response packet includes not an IP address of an information providing apparatus but an alias domain name as a CNAME, the relay apparatus 130c analyzes the DNS response packet which is transmitted to a terminal apparatus by a DNS server, detects an alias domain name of the information providing apparatus as a CNAME, and updates the service information table including the domain name and the service parameters corresponding to the domain name. Thus, the relay apparatus 130c can assure a communication quality by identifying a content distributed by the information providing apparatus having an alias domain name, and performing QoS processing. As a result, the user can view and listen to a video content with a high quality, in which interruption or disturbance of video does not occur.

### (Third embodiment)

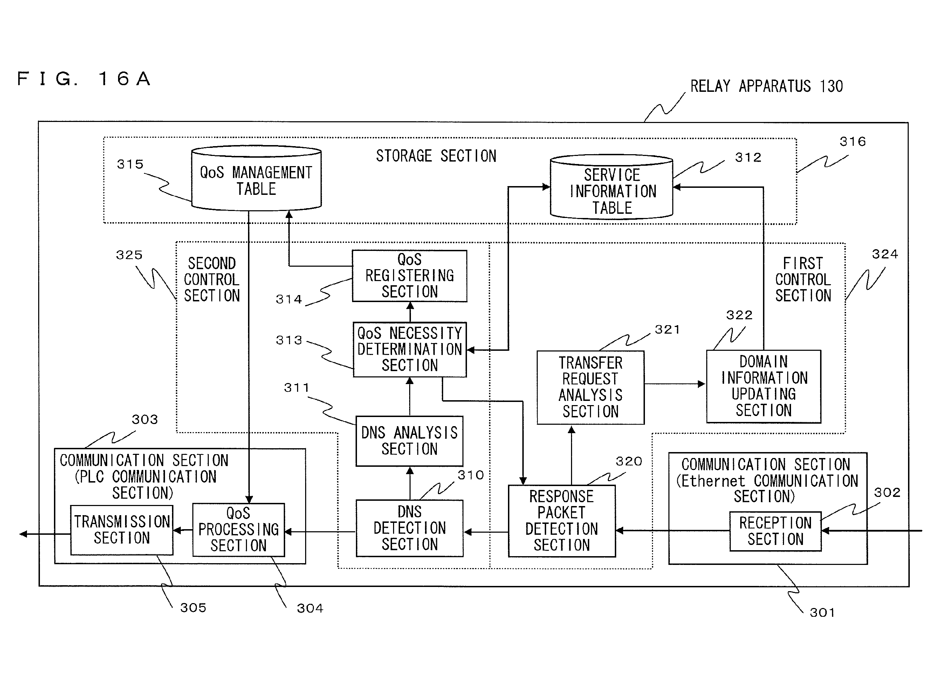

In the third embodiment, modifications of the relay apparatuses 130 described in the first embodiment and the second embodiment will be described. In the first embodiment or the second embodiment, a case where each of the relay apparatuses 130 includes one control section 323 is described. However, as shown in FIG. 16A, the relay apparatus 130 may include a first control section 324 and a second control section 325 in a separate manner in accordance with their functions. The first control section 324 has a function of updating the service information table 312, based on a response packet received by the reception section 302. The second control section 325 has a function of determining whether or not QoS processing is needed. In this case, the first control section 324 includes the response packet detection section 320, the transfer request analysis section 321, and the domain information updating section 322. The second control section 325 includes the DNS detection section 310, the DNS analysis section 311, the QoS necessity determination section 313, and the QoS registering section 314. Operations of these function blocks are as described above. Therefore, the description thereof is omitted here.

In addition, as shown in FIG. 16B, the relay apparatus 130 may include only the first control section 324. The reason is that the relay apparatus 130 can update the service information table 312 even if the relay apparatus 130 includes only the first control section 324.

### <Modifications>

(1) The relay apparatus and the method of table update according to each embodiment of the present invention are applicable to not only power line communications, but also wireless communications, or communications using a telephone line, a coaxial cable, an optical cable, or the like. In addition, the relay apparatus and the method of table update are applicable to communications using a USB (Universal Serial Bus), an HDMI (High-Definition Multimedia Interface) (registered trademark), an IEEE 1394, or the like. Thus, the relay apparatus and the method of table update of the present invention can be used with various types of transmission media.

(2) The relay apparatus and the method of table update according to each embodiment of the present invention are applicable to not only a bridge such as a relay apparatus, but also a router, a gateway, a layer 2 switch, a layer 3 switch, a layer 7 switch, or a brouter. A bridge and a layer 2 switch are relay apparatuses in the data link layer of an OSI (Open System Interconnection) reference model. A router and a layer 3 switch are relay apparatuses in the network layer of the OSI reference model. A gateway is a relay apparatus in the fourth layer or a higher layer of the OSI reference model. The layer 7 switch is a relay apparatus in the application layer of the OSI reference model. The brouter is a relay apparatus having both functions of a router and a bridge. Thus, the relay apparatus and the method of table update of the present invention can be used for not only a bridge, but also other types of relay apparatuses.

(3) In the relay apparatus and the method of table update according to each embodiment of the present invention, the relay apparatus 130c analyzes a DNS response packet transmitted from the DNS server. However, the relay apparatus and the method of table update of the present invention are not limited thereto, and can be realized even by the relay apparatus 130c analyzing a DNS response packet transmitted from a router having a DNS cache function. The router is provided between the DNS server and the relay apparatus 130c. Thus, the relay apparatus and the method of table update of the present invention can be used not only with a DNS server, but also in a network system using a relay apparatus such as a router having a DNS cache function.

(4) The relay apparatus and the method of table update according to each embodiment of the present invention are realized by using only the relay apparatus 130c connected to the second network 150. However, the relay apparatus and the method of table update of the present invention are not limited thereto, and can be realized by using the relay apparatuses 130a and 130b, in the same manner. Thus, quality assurance control for an uplink communication from the relay apparatus 130a to the relay apparatus 130c can also realized in a two-way link communication such as an internet telephone. In addition, it is easily conceivable that information about whether or not QoS processing is needed in an uplink communication is added as one item of service parameters in the service information table. Each of the relay apparatuses 130a and 130b can determine whether or not QoS processing is needed in an uplink communication, by referring to the service information table when the relay apparatus has received a DNS response packet.

It is noted that function blocks of the relay apparatus 130 described in each embodiment of the present invention may be realized as an LSI which is an integrated circuit. For example, the control section 323, or the first control section 324 and the second control section 325 of the relay apparatus 130 are formed as an integrated circuit. Each of the function blocks may be included in one chip, or some or all of the function blocks may be included in one chip. The LSI can be referred to as an IC, a system LSI, a super LSI, or an ultra LSI, depending on their integration degree.

In addition, a method of forming an integrated circuit is not limited to LSI, and a dedicated circuit or a general-purpose processor may be used. Alternatively, an FPGA (Field Programmable Gate Array) which can be programmed after an LSI is manufactured, or a reconfigurable processor which enables a connection or setting of a circuit cell in an LSI to be reconfigured, may be used. Alternatively, a configuration in which a control program of a ROM storing a processor is executed in a hardware resource having the processor, a memory, and the like, may be used.

Moreover, if a technology, for forming an integrated circuit, that can replace LSI emerges owing to advancement of a semiconductor technology or owing to another technology derived therefrom, it is natural that such a technology may be used for integrating function blocks. Biotechnology can be applied, for example.

### INDUSTRIAL APPLICABILITY

The present invention is applicable to various types of communication apparatuses needing bandwidth control in communication, such as a PLC bridge, a router, a gateway, a layer 2 switch, a layer 3 switch, a layer 7 switch, and a brouter.

### DESCRIPTION OF THE REFERENCE CHARACTERS

- 100, 100a, 100b: information providing apparatus
- 110, 110a, 110b: terminal apparatus
- 120: DNS server
- 130, 130a, 130b, 130c: relay apparatus
- 301: communication section
- 302: reception section
- 303: communication section
- 304: QoS processing
- 305: transmission section
- 310: DNS detection section
- 311: DNS analysis section
- 312: service information table
- 313: QoS necessity determination section
- 314: QoS registering section
- 315: QoS management table
- 316: storage section
- 320: response packet detection section
- 321: transfer request analysis section
- 322: domain information updating section
- 323: control section
- 401: DNS analysis section
- 402: QoS necessity determination section
- 403: domain information updating section
- 404: service information table
- 601: terminal apparatus
- 602: relay apparatus
- 603: relay apparatus
- 604: server
- 701: data identification section
- 702: queue
- 703: priority control section

## Claims

1. A relay apparatus which connects a first network and a second network in a mutual manner and relays a packet which is transmitted or received, the relay apparatus comprising:
a first communication section for communicating, via the first network, with a terminal apparatus that transmits an acquisition request for a content to a first information providing apparatus having a first domain name;
a second communication section for communicating, via the second network, with the first information providing apparatus;
a storage section for storing, as a service information table, the first domain name and a parameter that relates to transmission of the content, such that the first domain name and the parameter correspond to each other; and
a control section for,
when the second communication section has received a response packet transmitted from the first information providing apparatus to the terminal apparatus as a response to the acquisition request for the content transmitted from the terminal apparatus to the first information providing apparatus, determining whether or not the response packet indicates a transfer request, and
if the control section has determined that the response packet indicates the transfer request, storing, in the service information table, a second domain name, included in the response packet, that indicates a second information providing apparatus, such that the second domain name is associated with the first domain name.

2. The relay apparatus according to claim 1, wherein
the control section includes:
a response packet detection section for detecting a response packet in which an IP address of the first information providing apparatus is written as a transmission source, from response packets received by the second communication section, and for outputting the response packet that has been detected, to a transfer request analysis section;
the transfer request analysis section for analyzing the response packet that has been detected by the response packet detection section, and for determining whether or not the response packet indicates a transfer request; and
a domain information updating section, if the transfer request analysis section has determined that the response packet indicates a transfer request, stores, in the service information table, the second domain name, included in the response packet, that indicates the second information providing apparatus, such that the second domain name is associated with the first domain name.

3. The relay apparatus according to claim 2, wherein
the transfer request analysis section analyzes an HTTP message of the response packet, and if the response packet indicates HTTP redirection, determines that the response packet indicates a transfer request.

4. The relay apparatus according to claim 2 further comprising a second control section for determining whether or not QoS processing is needed, wherein
the second communication section communicates, via the second network, with a DNS server, and
the second control section includes:
a DNS detection section for detecting a DNS response packet that is a response to a DNS request packet transmitted from the terminal apparatus to the DNS server;
a DNS analysis section for extracts a predetermined domain name and an IP address corresponding to the predetermined domain name, from the DNS response packet detected by the DNS detection section; and
a QoS necessity determination section for determining whether or not the predetermined domain name extracted by the DNS analysis section is registered in the service information table, and if the QoS necessity determination section has determined that the predetermined domain name extracted by the DNS analysis section is registered in the service information table, determines that QoS processing is needed for the predetermined domain name.

5. The relay apparatus according to claim 4, wherein
if the QoS necessity determination section has determined that the predetermined domain name extracted by the DNS analysis section is registered in the service information table, the QoS necessity determination section outputs the IP address extracted by the DNS analysis section to the response packet detection section.

6. The relay apparatus according to claim 4, wherein
the first communication section further includes
a QoS processing section for, if the QoS necessity determination section has determined that the predetermined domain name included in the DNS response packet coincides with the first domain name, referring to the service information table, and setting the parameter, which relates to QoS processing, corresponding to the first domain name, for a relay packet that relays the content transmitted from the first information providing apparatus to the terminal apparatus.

7. The relay apparatus according to claim 4, wherein
the first communication section further includes
a QoS processing section for, if the QoS necessity determination section has determined that the predetermined domain name included in the DNS response packet coincides with the second domain name, referring to the service information table, and setting the parameter, which relates to QoS processing, corresponding to the first domain name with which the second domain name is associated, for a relay packet that relays the content transmitted from the second information providing apparatus to the terminal apparatus.

8. The relay apparatus according to claim 4, wherein
the storage section further stores a QoS management table for storing a parameter that relates to QoS processing,
the QoS necessity determination section, if the QoS necessity determination section has determined that the predetermined domain name included in the DNS response packet is registered in the service information table, obtains a parameter corresponding to the predetermined domain name from the service information table,
the second control section further includes a QoS registering section for storing, in the QoS management table, the parameter obtained by the QoS necessity determination section, and
the first communication section further includes a QoS processing section for referring to the QoS management table, and setting, for a relay packet that relays the content transmitted from an information providing apparatus corresponding to the predetermined domain name to the terminal apparatus, the parameter, which relates to QoS processing, corresponding to the relay packet.

9. The relay apparatus according to claim 1, wherein
if the control section has determined that the response packet does not indicate a transfer request, the control section does not store information included in the response packet, in the service information table.

10. The relay apparatus according to claim 5, wherein
if the QoS necessity determination section has determined that the predetermined domain name included in the DNS response packet does not coincide with the first domain name, the QoS necessity determination section does not output the IP address included in the DNS response packet to the response packet detection section.

11. The relay apparatus according to claim 1, wherein the transfer request is HTTP redirection.

12. A relay apparatus which connects a first network and a second network in a mutual manner and relays a packet which is transmitted or received, the relay apparatus comprising:
a first communication section for communicating, via the first network, with a terminal apparatus that requests a first information providing apparatus having a first domain name to transmit a content;
a second communication section for communicating, via the second network, with a DNS server;
a storage section for storing, as a service information table, the first domain name and a parameter that relates to transmission of the content, such that the first domain name and the parameter correspond to each other; and
a control section for,
when the second communication section has received a DNS response packet that is a response to a DNS request packet transmitted from the terminal apparatus to the DNS server and requesting the DNS server for an IP address corresponding to a predetermined domain name, and that includes the predetermined domain name and a second domain name indicating an alias name of the predetermined domain name, determining whether or not the predetermined domain name included in the DNS response packet coincides with the first domain name, and
if the control section has determined that the predetermined domain name included in the DNS response packet coincides with the first domain name, storing, in the service information table, the second domain name included in the DNS response packet, such that the second domain name is associated with the first domain name.

13. The relay apparatus according to claim 12, wherein a resource record type of the DNS response packet including the second domain name indicating the alias name of the predetermined domain name is a CNAME.

14. A method that is performed by a relay apparatus which connects a first network and a second network in a mutual manner and transmits or receives a packet, the relay apparatus including a storage section for storing, as a service information table, a first domain name and a parameter that relates to transmission of a content, such that the first domain name and the parameter correspond to each other, the method comprising:
a step of causing a first communication section of the relay apparatus to communicate, via the first network, with a terminal apparatus that requests a first information providing apparatus having a first domain name to transmit a content;
a step of causing a second communication section of the relay apparatus to communicate, via the second network, with the first information providing apparatus; and
a step of,
when the second communication section has received a response packet transmitted from the first information providing apparatus to the terminal apparatus as a response to the acquisition request for the content transmitted from the terminal apparatus to the first information providing apparatus, determining whether or not the response packet indicates a transfer request, and
if the control section has determined that the response packet indicates the transfer request, storing, in the service information table, a second domain name, included in the response packet, that indicates a second information providing apparatus, such that the second domain name is associated with the first domain name.

15. A method that is performed by a relay apparatus which connects a first network and a second network in a mutual manner and transmits or receives a packet, the relay apparatus including a storage section for storing, as a service information table, a first domain name and a parameter that relates to transmission of a content, such that the first domain name and the parameter correspond to each other, the method comprising:
a step of causing a first communication section of the relay apparatus to communicate, via the first network, with a terminal apparatus that requests a first information providing apparatus having a first domain name to transmit a content;
a step of causing a second communication section of the relay apparatus to communicate, via the second network, with a DNS server that manages an IP address of the first information providing apparatus; and
a step of,
when the second communication section has received a DNS response packet that is a response to a DNS request packet transmitted from the terminal apparatus to the DNS server and requesting the DNS server for the IP address of the first information providing apparatus corresponding to a predetermined domain name, and that includes the predetermined domain name and a second domain name indicating an alias name of the predetermined domain name, determining whether or not the predetermined domain name included in the DNS response packet coincides with the first domain name, and
if the control section has determined that the predetermined domain name included in the DNS response packet coincides with the first domain name, storing, in the service information table, the second domain name included in the DNS response packet, such that the second domain name is associated with the first domain name.

16. An integrate circuit included in a relay apparatus which connects a first network and a second network in a mutual manner and relays a packet which is transmitted or received,
the relay apparatus comprising:
a first communication section for communicating, via the first network, with a terminal apparatus that transmits an acquisition request for a content to a first information providing apparatus having a first domain name;
a second communication section for communicating, via the second network, with the first information providing apparatus; and
a storage section for storing, as a service information table, the first domain name and a parameter that relates to transmission of the content, such that the first domain name and the parameter correspond to each other, and
the integrated circuit comprising:
a control section for,
when the second communication section has received a response packet transmitted from the first information providing apparatus to the terminal apparatus as a response to the acquisition request for the content transmitted from the terminal apparatus to the first information providing apparatus, determining whether or not the response packet indicates a transfer request, and
if the control section has determined that the response packet indicates the transfer request, storing, in the service information table, a second domain name, included in the response packet, that indicates a second information providing apparatus, such that the second domain name is associated with the first domain name.

17. An integrate circuit included in a relay apparatus which connects a first network and a second network in a mutual manner and relays a packet which is transmitted or received,
the relay apparatus comprising:
a first communication section for communicating, via the first network, with a terminal apparatus that requests a first information providing apparatus having a first domain name to transmit a content;
a second communication section for communicating, via the second network, with a DNS server; and
a storage section for storing, as a service information table, the first domain name and a parameter that relates to transmission of the content, such that the first domain name and the parameter correspond to each other, and
the integrated circuit comprising:
a control section for,
when the second communication section has received a DNS response packet that is a response to a DNS request packet transmitted from the terminal apparatus to the DNS server and requesting the DNS server for an IP address corresponding to a predetermined domain name, and that includes the predetermined domain name and a second domain name indicating an alias name of the predetermined domain name, determining whether or not the predetermined domain name included in the DNS response packet coincides with the first domain name, and
if the control section has determined that the predetermined domain name included in the DNS response packet coincides with the first domain name, storing, in the service information table, the second domain name included in the DNS response packet, such that the second domain name is associated with the first domain name.
